# EUROPEAN PATENT APPLICATION

(11) **EP 1 307 039 A2**
(43) Date of publication of application: **02.05.2003**
(21) Application number: 02257427.1
(22) Date of filing: 25.10.2002
(51) Int. Cl.: H04N 1/04, H04N 1/19, H04N 1/401

(54) **Image processing apparatus and image scanning apparatus**

(30) Priority: 26.10.2001 JP 2001328888
(71) Applicant: Ricoh Company Ltd., Tokyo 143-8555 (JP)
(72) Inventor: Fukuda, Hiroaki, Yamato-shi, Kanagawa (JP); Miyazaki, Shinya, Tokyo (JP); Namizuka, Yoshiyuki, Sagamiahara-shi, Kanagawa (JP); Wakahara, Shinichi, Yamato-shi, Kanagawa (JP); Baba, Hiroyuki, Kawasaki-shi, Kanagawa (JP); Okimoto, Morihiko, Tokyo (JP)
(74) Representative: Leeming, John Gerard

(57) **Abstract**

An image processing apparatus and an image scanning apparatus detect a position of an abnormal pixel caused by obstruction to reflected light from a manuscript due to dust and others and correct the abnormal pixel by using data of normal pixels surrounding the abnormal pixel on the basis of a result of the detection. Based on image data read from a null-image prior to optical reading of a manuscript, an abnormal pixel detecting part detects the position of the abnormal pixel caused by the dust and others lying on a contact glass equipped between the manuscript and a CCD. An abnormal pixel correcting part uses pixel information at the position of the abnormal pixel detected by the abnormal pixel detecting part to correct image data read from the manuscript.

## Description

The present invention relates to image processing apparatuses and image scanning apparatuses such as monochrome copiers, color copiers, facsimiles and scanners and, more particularly, to an image processing apparatus and an image scanning apparatus capable of detecting and correcting an abnormal pixel showing up as a white streak and a black streak on an image caused by dust when a sheet-through document feeder (SDF) is used.

In conventional image scanning apparatuses such as copiers, a scanned image is adversely influenced by dust on a base board or a contact glass, thereby deteriorating an image produced from the scanned image.

Japanese Laid-Open Patent Application No. 11-112800 discloses an image scanning apparatus to address the above-mentioned problem. The image scanning apparatus stores pixel data read from a base board of the image scanning apparatus. Based on the read pixel data, the image scanning apparatus detects an abnormal pixel whose output value exceeds those of adjacent pixels above a predetermined value. Then, the image scanning apparatus corrects the output value of the detected abnormal pixel by using the output values of the adjacent pixels and replaces the output value of the abnormal pixel with the corrected one.

In addition, in Japanese Laid-Open Patent Application No. 2000-196881, an image scanning apparatus optimizes SDF-based correction and platen-based correction separately, whereby enabling a copier to produce an image optimally as well as a facsimile to produce a binary image optimally.

In Japanese Laid-Open Patent Application No. 10-294870, an image scanning apparatus divides a white-based range into a plurality of blocks in the sub-scan direction. For each of the blocks, the image scanning apparatus computes an average of values read from pixels in the block. Comparing the computed averages of the blocks, the image scanning apparatus identifies and eliminates a block suffering from dust in order to set a white basis from the remaining blocks.

However, any of the above-mentioned image scanning apparatuses use density information on pixels adjacent in the main-scan direction to correct a pixel suffering from dust. As a result, the image scanning apparatuses have a disadvantage that there may be a lack of pixel continuity related to a corrected range in the sub-scan direction when the image scanning apparatuses deal with an image having a strong correlation related to the sub-scan direction.

In addition, vibration of the SDF may result in fluctuation of a position to be read, thereby interfering with reliable detection of an abnormal pixel. Under this situation, since the abnormal pixel is corrected unsuccessfully for the sake of fluctuation of the correction, an improper portion of an image such as a white streak or a black streak may remain in a produced image.

It is a general object of the present invention to provide an improved and useful image processing apparatus and an improved and useful image scanning apparatus in which the above-mentioned problems are eliminated.

A more specific object of the present invention is to provide an image processing apparatus and an image scanning apparatus capable of detecting accurately a position of a pixel whose image information is lost because of obstruction of dust toward reflected light and correcting properly the detected pixel without impairing the pixel continuity in the sub-scan direction with reference to normal pixels in the neighborhood of the detected pixel.

In order to achieve the above-mentioned objects, there is provided according to one aspect of the present invention an image processing apparatus for processing image data read from a manuscript by an image scanning apparatus illuminating light from an illuminant to the manuscript that is delivered by a manuscript delivery part and receiving reflected light from a surface of the manuscript by a photoelectric converting part to convert into digital data, comprising: an abnormal pixel detecting part moving the image scanning apparatus by a predetermined small distance to read a null-image part before the image scanning apparatus reads the manuscript and detecting an abnormal pixel from a plurality of lines in image data read from the null-image part; and an abnormal pixel correcting part correcting an abnormal pixel in the image data read from the manuscript by the image scanning apparatus on the basis of information on the abnormal pixel detected by the abnormal pixel detecting part.

According to the above-mentioned invention, it is possible to detect accurately an abnormal pixel caused by dust and others by weakening influence on noise and correct successfully a vertical streak resulting from the abnormal pixel. As a result, the image processing apparatus can read a high-quality image with high reliability.

In the above-mentioned image processing apparatus, the image processing apparatus may further comprise a white back board at a position where light is illuminated from the illuminant of the image scanning apparatus, wherein the abnormal pixel detecting part checks whether or not there is black dust on glass that obstructs the reflected light on the basis of information on image data read from the white back board before said manuscript is delivered.

In the above-mentioned image processing apparatus, the image processing apparatus may further comprise a black back board at a position where light is illuminated from the illuminant of the image scanning apparatus, wherein the abnormal pixel detecting part checks whether or not there is white dust on glass that obstructs the reflected light on the basis of information on image data read from the black back board before the manuscript is delivered.

In the above-mentioned image processing apparatus, the image processing apparatus may further comprise a back board having a white back board and a black back board at a position where light is illuminated from the illuminant of the image scanning apparatus, wherein the abnormal pixel detecting part checks whether or not there are black dust and white dust on glass that obstructs the reflected light on the basis of information on image data read from the white back board and the black back board in a manner in which the back board slides or rotates to switch the white back board and said black back board alternately before the manuscript is delivered.

According to the above-mentioned invention, it is possible to detect accurately the position of an abnormal pixel caused by a black object such as dust or a white object such as paper dust lying on a glass.

In the above-mentioned image processing apparatus, the abnormal pixel detecting part may conduct two-dimensional search for a candidate of abnormal pixels in the image data from a plurality of lines in the image data read from the null-image part and detect a maximal range of a one-dimensional projection while the image scanning part is still at a predetermined position.

According to the above-mentioned invention, it is possible to identify a boundary of dust and others through the two-dimensional search and detect an appropriate range of pixels where correction should be performed. At the same time, it is also possible to gain an average density of abnormal pixels.

In the above-mentioned image processing apparatus, the abnormal pixel detecting part may take an average in the sub-scan direction of a plurality of lines in the image data read from the null-image part, binarize an averaged image data to detect an abnormal pixel, and take an average in the main-scan direction of the averaged image data in the sub-scan direction to compute a density of the abnormal pixel.

According to the above-mentioned invention, it is possible to gain accurately a position of an abnormal pixel and a density of the abnormal pixel.

In the above-mentioned image processing apparatus, the abnormal pixel correcting part may have an abnormal pixel deleting part for deleting a range including an abnormal pixel detected by the abnormal pixel detecting part from image data read by the image scanning apparatus on the basis of information on a position of the abnormal pixel and a pixel enlarging part for enlarging a length of a deleted image data to a length of the image data read by the image scanning apparatus.

According to the above-mentioned invention, it is possible to produce an image without a vertical streak caused by an abnormal pixel.

In the above-mentioned image processing apparatus, the abnormal pixel correcting part may have a density correcting part for decreasing a density of pixels in a range including an abnormal pixel detected by the abnormal pixel detecting part from image data read by the image scanning apparatus on the basis of information on a position of the abnormal pixel and a density of the abnormal pixel and an MTF weak-correcting part for weakening MTF correction for pixels in the range including an abnormal pixel detected by the abnormal pixel detecting part from image data read by the image scanning apparatus.

According to the above-mentioned invention, the abnormal pixel correcting part decrease a density of pixels within a range where a vertical streak may appear under influence of an abnormal pixel to gain normal pixels.

In the above-mentioned image processing apparatus, the abnormal pixel correcting part may have a surrounding pixel statistic operating part for producing correction data from pixels around a range including an abnormal pixel detected by the abnormal pixel detecting part from image data read by the image scanning apparatus on the basis of information on a position of the abnormal pixel and a data switching part for substituting a pixel that is anticipated to become abnormal for the correction data.

According to the above-mentioned invention, the abnormal pixel correcting part can considerably decrease a vertical streak.

In the above-mentioned image processing apparatus, the abnormal pixel correcting part may have a surrounding pixel variance computing part for constructing a pixel matrix whose center element is the abnormal pixel and computing an average of surrounding pixels in a direction whose variance is less than any other direction with reference to normal pixels in each direction of the matrix in order to substitute the abnormal pixel for the average.

In the above-mentioned image processing apparatus, the abnormal pixel correcting part may have an average computing part for constructing a pixel matrix whose center element is the abnormal pixel and computing an average of only normal surrounding pixels in order to substitute the abnormal pixel for the average.

In the above-mentioned image processing apparatus, the abnormal pixel correcting part may have a maximum detecting part for constructing a pixel matrix whose center element is the abnormal pixel and detecting a pixel with a maximal density in a left-side column of the matrix and a pixel with a maximal density in a right-side column of the matrix and an average computing part for correcting the abnormal pixel by using the pixel with a maximal density in a left-side column of the matrix and the pixel with a maximal density in a right-side column of the matrix.

In the above-mentioned image processing apparatus, the abnormal pixel correcting part has a binarization/measurement processing part for constructing a pixel matrix whose center element is the abnormal pixel and binarizing pixels in the matrix surrounding the center element and a dynamic average computing part for producing correction data on the basis of a proportion of numbers of "0" and "1" in binarized data.

According to the above-mentioned invention, the abnormal pixel correcting part can conduct appropriate correction without a loss of continuity of an image in the sub-scan direction, thereby reading a high-quality image with high reliability.

In the above-mentioned image processing apparatus, the abnormal pixel correcting part may have a surrounding pixel computing part for constructing a pixel matrix whose center element is the abnormal pixel and computing an average of surrounding pixels in a direction whose variance is less than any other direction with reference to normal pixels in each direction of the matrix in order to substitute the abnormal pixel for the average, an average computing part for computing an average of only normal surrounding pixels in order to substitute the abnormal pixel for the average, and a data switching part for select either correction data substituted by the surrounding pixel computing part or correction data substituted by the average computing part according to a mode setting of an image.

According to the above-mentioned invention, the abnormal pixel correcting part can conduct optimal correction according to a type of manuscript and read a high-quality image with high reliability.

In the above-mentioned image processing apparatus, the image processing apparatus further may comprise an image displaying part for displaying a corrected image.

According to the above-mentioned invention, an operator can check whether or not the correction is successful with reference to a displayed image and determine whether the correction will be valid hereafter or a condition of the correction should be altered. As a result, the abnormal pixel correcting part can conduct optimal correction according to a type of manuscript and read a high-quality image with high reliability.

Additionally, there is provided according to another aspect of the present invention an image scanning apparatus for illuminating light from an illuminant to a manuscript that is delivered by a manuscript delivery part and receiving reflected light from a surface of the manuscript by a photoelectric converting part to convert into digital data, comprising: an abnormal pixel detecting part detecting a position of an abnormal pixel from which information data cannot be read due to a black object such as dust and a white object such as paper dust lying on a glass between the manuscript and the photoelectric converting part before a portion of reflected light from a surface of the manuscript is reached to the photoelectric converting part; and a cleaning alarming part supplying an alarm to urge cleaning on the glass when the abnormal pixel detecting part detects an abnormal pixel.

Additionally, there is provided according to another aspect of the present invention an image scanning apparatus for illuminating light from an illuminant to a manuscript that is delivered by a manuscript delivery part and receiving reflected light from a surface of the manuscript by a photoelectric converting part to convert into digital data, comprising: an abnormal pixel detecting part detecting a position of an abnormal pixel from which information data cannot be read due to a black object such as dust and a white object such as paper dust lying on a glass between the manuscript and the photoelectric converting part before a portion of reflected light from a surface of the manuscript is reached to the photoelectric converting part; and a cleaning part cleaning a surface of the glass when the abnormal pixel detecting part detects an abnormal pixel.

According to the above-mentioned invention, it is possible to prevent a lack of image information and to read a high-quality image with high reliability.

Other objects, features and advantages of the present invention will become more apparent from the following detailed description when read in conjunction with the accompanying drawings.
FIG. 1 is a diagram illustrating a structure of an image scanning apparatus according to the present invention;
FIG. 2 is a block diagram illustrating a structure of a control part of the image scanning apparatus in FIG. 1;
FIG. 3 is a block diagram roughly illustrating a structure of a preprocessing part of the control part in FIG. 2;
FIG. 4 is a diagram illustrating a state in which a manuscript is being read at a book mode;
FIG. 5 is a diagram illustrating a state in which a manuscript is being read at an SDF mode;
FIG. 6 is a diagram illustrating how a manuscript flows inside an SDF;
FIG. 7 is a pattern diagram illustrating an image with a black streak and an image with a white streak;
FIG. 8A is a diagram illustrating a structure of a slide type back board having a black back board and a white back board;
FIG. 8B is a diagram illustrating a structure of a cylinder type back board having a black back board and a white back board;
FIG. 9 is a block diagram illustrating a structure of an abnormal pixel detecting part;
FIG. 10 is a block diagram illustrating a structure of an abnormal pixel correcting part;
FIG. 11 is a flowchart of an operation to read a manuscript;
FIG. 12A is a diagram illustrating variation of an output level of a pixel read in the main-scan direction with respect to a pixel position;
FIG. 12B is a diagram illustrating a location of abnormal pixels with respect to a plurality of lines;
FIG. 12C is a diagram illustrating variation of an average density with respect to a pixel position obtained when a range illustrated in FIG. 12B is read in the vertical direction;
FIG. 13A is a diagram illustrating a filter for a contour emphasizing part;
FIG. 13B is a diagram illustrating data containing abnormal pixels;
FIG. 14A is a diagram illustrating variation of a sampling function h(r) ;
FIG. 14B is a diagram illustrating interpolation for resampling positions;
FIG. 15 is a diagram illustrating a sequence of processes for removing an abnormal pixel in image data read from a manuscript and enlarging the deleted image data;
FIG. 16 is a block diagram illustrating a structure of a second abnormal pixel detecting part;
FIG. 17 is a diagram illustrating variation of a density with respect to a pixel position;
FIG. 18 is a block diagram illustrating a structure of a second abnormal pixel correcting part;
FIG. 19 is a diagram illustrating a structure of a third abnormal pixel correcting part;
FIG. 20 is a diagram illustrating correction by using statistic data;
FIG. 21 is a block diagram illustrating a structure of a fourth abnormal pixel correcting part;
FIG. 22 is a diagram illustrating a pixel matrix for abnormal pixel correction;
FIG. 23 is a block diagram illustrating a structure of a fifth abnormal pixel correcting part;
FIG. 24 is a block diagram illustrating a structure of a sixth abnormal pixel correcting part;
FIG. 25 is a block diagram illustrating a structure of a seventh abnormal pixel correcting part;
FIG. 26 is a block diagram illustrating a structure of an eighth abnormal pixel correcting part;
FIG. 27 is a pattern diagram illustrating a pixel matrix representing a binarized image data;
FIG. 28 is a block diagram illustrating a structure of a ninth abnormal pixel correcting part;
FIG. 29A is a pattern diagram illustrating image data containing abnormal pixels;
FIG. 29B is a pattern diagram illustrating image data read from the manuscript;
FIG. 29C is a pattern diagram illustrating a corrected image data of the image data in FIG. 29B;
FIG. 30 is a flowchart illustrating a correcting process;
FIG. 31 is a flowchart illustrating another correcting process;
FIG. 32 is a block diagram illustrating a structure of an alarm displaying process;
FIG. 33 is a view at an alarm displayed by an operation displaying part;
FIG. 34 is a block diagram illustrating a structure of an automatic cleaning process; and
FIG. 35A is a diagram illustrating a structure of a cleaning part having a rolling cleaning part; and
FIG. 35B is a diagram illustrating a structure of a cleaning part having an air blowout part.

An embodiment of the present invention will now be described with reference to figures.

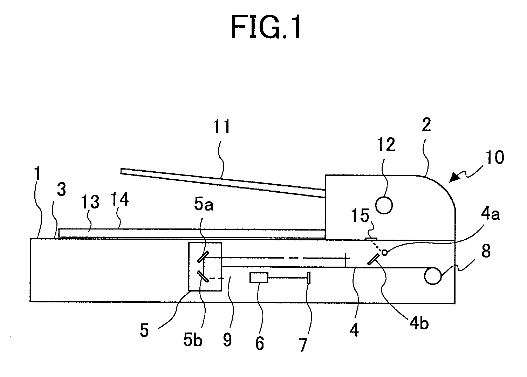

FIG. 1 is a diagram illustrating a structure of an image scanning apparatus. The image scanning apparatus comprises a reading part 1, a manuscript carrying part 2 and a manuscript reading platform 3. The reading part 1 includes an optical system for exposure scanning 9 comprising a first scanning part 4, a second scanning part 5, a lens 6, a one-dimensional photoelectric converting element such as a CCD 7 and a stepping motor 8 for driving the first scanning part 4 and the second scanning part 5. Furthermore, the first scanning part 4 comprises an illuminant 4a formed of a xenon lamp or a fluorescent lamp and a mirror 4b, and the second scanning part 5 comprises mirrors 5a and 5b. The manuscript carrying part 2 comprises a sheet-through document feeder (SDF) 10 and a manuscript platform 11. The SDF 10 has a stepping motor 12. A manuscript press board 14 for pressing a manuscript is equipped over the manuscript reading platform 3. The manuscript press board 14 is capable of rotating freely. A white reference board 15 for shading correction is placed at an edge of the manuscript reading platform 3.

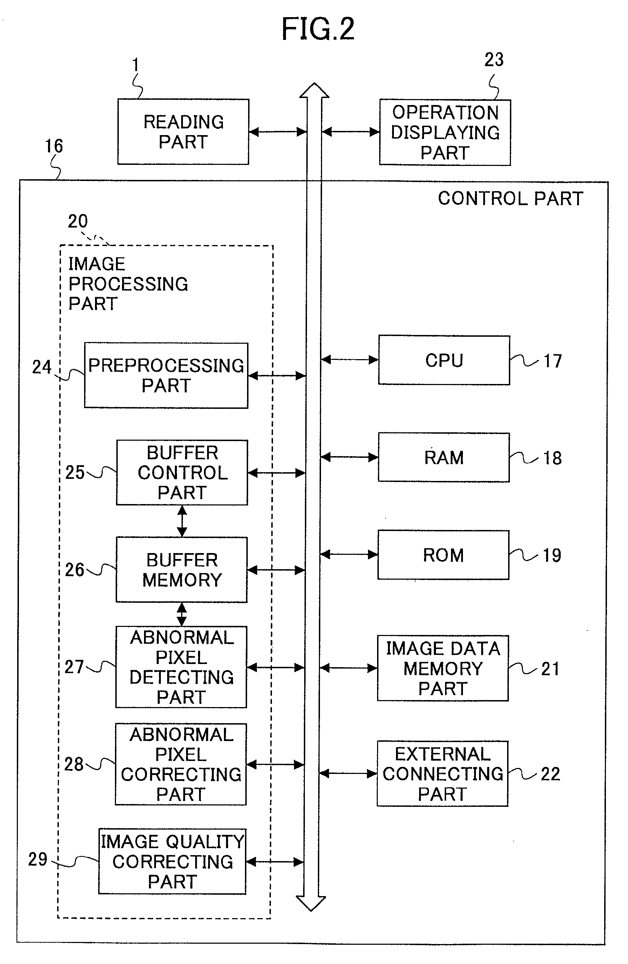

FIG. 2 is a block diagram illustrating a structure of a control part of the image scanning apparatus in FIG. 1. As shown in the block diagram in FIG. 2, the control part 16 comprises a CPU 17 administrating entire operations in the image scanning apparatus, a RAM 18 serving as a working memory for the CPU 17, a ROM 19 storing some control programs, an image processing part 20, an image data memory part 21 and an external connecting part 22 controlling a delivery of data stored in the image data memory part 21 to an external apparatus such as a computer. The control part 16 is connected with the reading part 1 and an operation displaying part 23. The image processing part 20 comprises a preprocessing part 24, a buffer control part 25, a buffer memory 26, an abnormal pixel detecting part 27, an abnormal pixel correcting part 28 and an image quality correcting part 29.

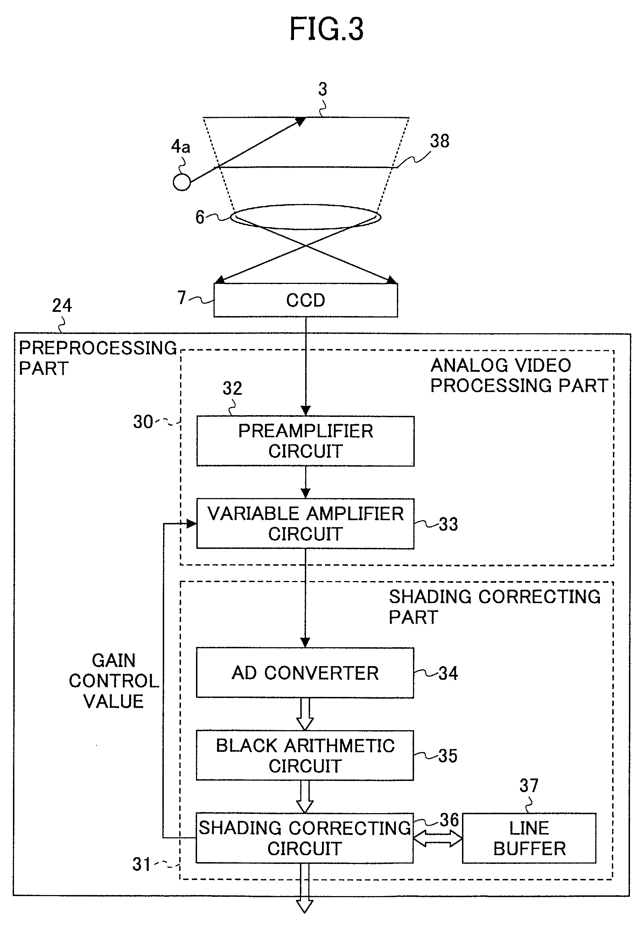

FIG. 3 is a block diagram illustrating a structure of the preprocessing part 24 in FIG. 2. As shown in the block diagram in FIG. 3, the preprocessing part 24 comprises an analog video processing part 30 and a shading correcting part 31. The analog video processing part 30 has a preamplifier circuit 32 and a variable amplifier circuit 33. The shading correcting part 31 has an A/D converter 34, a black arithmetic circuit 35, a shading correcting circuit 36 and a line buffer 37. The illuminant 4a illuminates light to the manuscript 13 on the manuscript platform 3. Through a shading adjusting board 38, the reflected light from the manuscript 13 is gathered by the lens 6, which is sent to the CCD 7. The shading adjusting board 38 is responsible to adjust an amount of light so that a center and an edge of the CCD 7 can have the same amount of light. At execution of the shading correction, when there is much difference in the amount of light between the center and the edge of the CCD 7, the correction results in distortion. Accordingly, after eliminating the difference in the amount of light in advance as the above-mentioned manner, the shading correction should be performed.

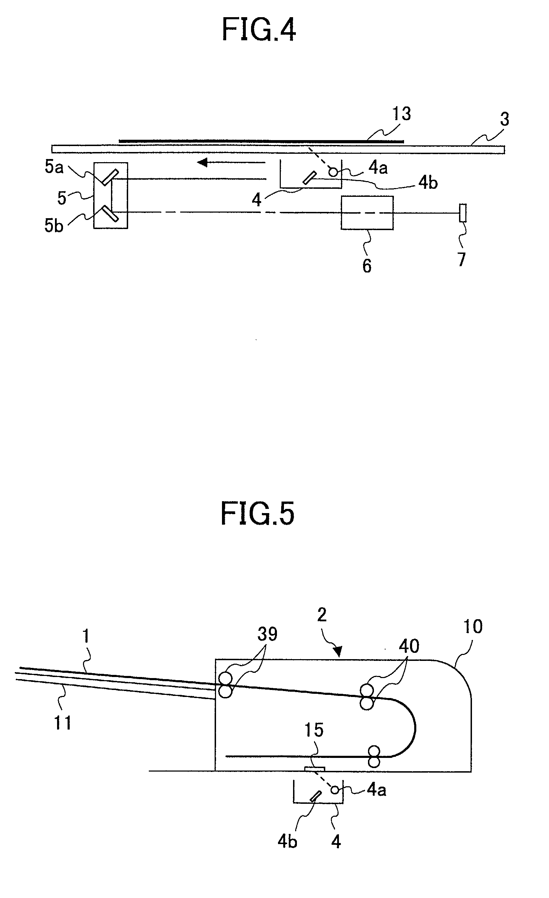

A description will now be given, with reference to FIG. 4 and FIG. 5, of two manuscript reading modes of the image scanning apparatus: a book mode and an SDF mode. In the book mode, the image scanning apparatus puts the manuscript 13 on the manuscript reading platform 3 to read image data of the manuscript 13 as shown in FIG. 4. In the SDF mode, the image scanning apparatus reads the image data of the manuscript 13 while the manuscript carrying part 2 carries the manuscript 13 as shown in FIG. 5.

Under the book mode, the image scanning apparatus mainly performs as follows: After the manuscript 13 is set on the manuscript reading platform 3 beneath the manuscript press board 14, the CPU 17 powers the illuminant 4a on. Next, the CCD 7 reads the white reference board 15, and the A/D converter 34 of the preprocessing part 24 performs analog to digital conversion for image data read from the white reference board 15. The digital image data is maintained as reference data for the shading correction. Then, the CPU 17 lets the first scanning part 4 moving to a position of the manuscript 13. The first scanning part 4 scans a surface of the manuscript 13 while moving at a constant speed. At the time, the CCD 7 performs photoelectric conversion for an image of the manuscript 13 and sends the resulting image data as an analog video signal to the preprocessing part 24 of the image processing part 20.

After the analog video signal to the preprocessing part 24 is amplified in the analog video processing part 30, the amplified analog video signal is converted into a digital signal in the A/D converter 34 of the shading correcting part 31. Under a gain adjustment of the A/D conversion, a black level adjustment and a white level adjustment are performed in order to assure a dynamic range of the digital signal.

When the read image data is mainly formed of characters, the distinction between the characters and background of the manuscript 13 can be clearly recognized. In this situation, if the background contains dust, signal levels corresponding to the dust are removed. On the other hand, when the read image data is formed of a picture, it is necessary to prepare a wide range of gradation. In this situation, the background of the manuscript 13 should not be removed because the background may contain important information. In addition, it is possible to change a level of quantization together with a pixel density of the read image depending on a size of the read image data and how an external device connected with the image scanning apparatus uses the read image data. For example, when an artistic image such as a graphic art is read, it is expected to enhance resolution and the level of quantization per a pixel. On the other hand, when character information is extracted from an image that is created for optical character reader (OCR), coarse resolution and the lower level of quantization is sufficient.

For the resulting digital image data, the shading correction and spectral unevenness are performed to correct spectral distribution of the illumination system, and some image data processes are performed for the resulting digital image data.

If the digital image data is expected to be used as binary data, the corresponding binary data is created. If the digital image data is expected to be used as multi-valued data, the corresponding 8-bit data is created. The created data is stored in the image data memory part 21 and is delivered to a host computer and others through the external connecting part 22.

Under the SDF mode, the image scanning apparatus mainly performs as follows: At the beginning, the image scanning apparatus reads the white reference board 15. As shown in FIG. 5, a detaching roller 39 detaches a sheet of the manuscript 13 on the manuscript platform 11 one by one. A carrying roller 40 carries the detached sheet of the manuscript 13 to a predetermined position where the first scanning part 4 reads an image of the sheet. At this time, the manuscript 13 is being carried at a constant speed so that the first scanning part 4 can read the image of the manuscript 13 through the CCD 7 in a stationary state. Subsequent processes are performed similarly to those under the book mode. The resulting image data is stored in the image data memory part 21 as binary data or multi-valued data.

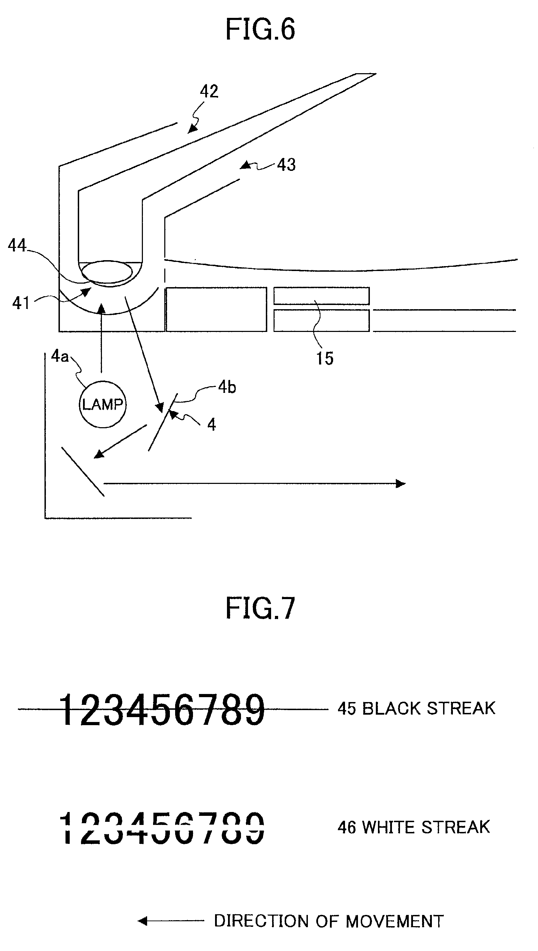

The detailed description will now be given, with reference to FIG. 6, of actions for reading an image of the manuscript 13 under the SDF mode. As mentioned above, in order to read the image of the manuscript 13 that is carried at a constant speed, the first scanning part 4 is fixed at the predetermined position. The read image is formed as a mirror image of the corresponding image obtained under the book mode related to the main-scan direction. Consequently, when the read image is output, it is necessary to perform a mirroring process whereby the right and the left of the read image are exchanged. A stepping motor controls how the manuscript 13 is carried. When the read image is scaled up or down related to the direction where the manuscript 13 is being carried (the sub-scan direction), the stepping motor changes the moving speed of the manuscript 13.

A sequence of actions for the above-mentioned operation is as follows; The first scanning part 4 is staying at its home position 41, where the first scanning part 4 scans an image of the manuscript 13. Before reading the image, the first scanning part 4 needs to read the white reference board 15 for the shading correction. In order to read the white reference board 15, the first scanning part 4 being now at the home position 41 temporally moves beneath the white reference board 15. Then, the first scanning part 4 reads illumination distribution of the white reference board 15 and produces shading data to normalize read data. Then, the first scanning part 4 moves back to the home position 41. The first scanning part 4 is fixed at the home position 41 to read the image of the carried manuscript 13. The manuscript 13 is thrown in a manuscript input part 42, is carried through beneath the home position 41 and is thrown out a manuscript output part 43. When the manuscript 13 is carried through beneath the home position 41, the first scanning part 4 reads the manuscript 13. At this time, if there is any black dust on a surface of a contact glass, the read image ends up an image with a black streak 45 shown in FIG. 7. On the other hand, if there is any dust on the surface of the contact glass, the read image ends up an image with a white streak 46 shown in FIG. 7.

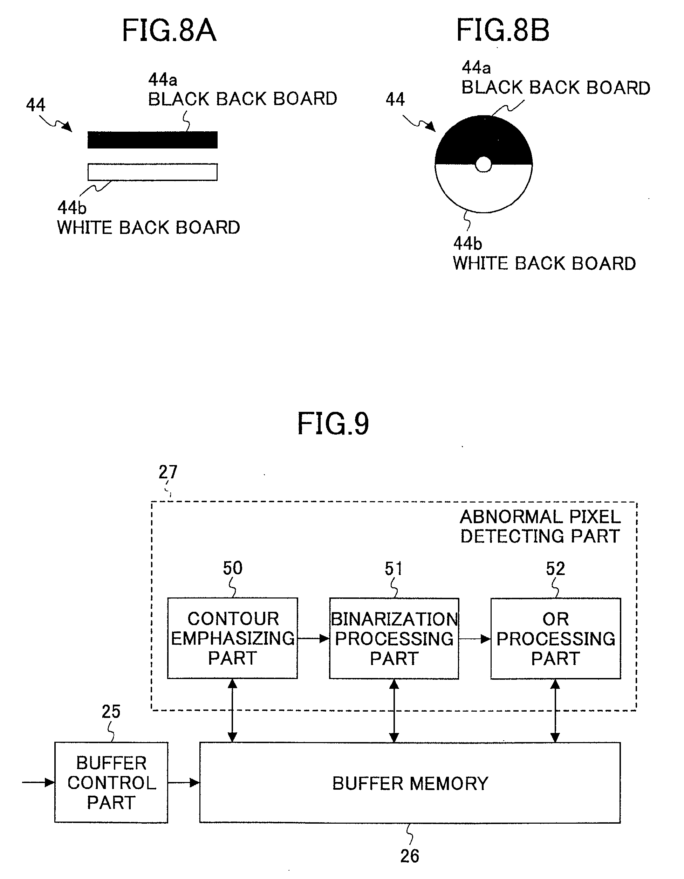

In order to detect an abnormal pixel caused by the dust, as soon as the first scanning part 4 returns at the home position 41, the first scanning part 4 reads the surface of the contact glass in a state without any image by illuminating light from the illuminant 4a. Basically, the first scanning part 4 reads a condition of a back board 44 of the SDF 10 for pressing the carried manuscript 13. In order to detect an abnormal pixel caused by black dust on the contact glass, a back board 44 should be white-colored. If there is no black dust on the contact glass, the first scanning part 4 results in reading a white image. On the other hand, in order to detect an abnormal pixel caused by white dust on the contact glass, the back board 44 should be black-colored. If there is no white dust on the contact glass, the first scanning part 4 results in reading a black image. Incorporating the above-mentioned properties, two types of the back board 44 are presented in FIG. 8A and FIG. 8B. As shown in FIG. 8A, the back board 44 may be formed of a black back board 44a and a white back board 44b so that the back board 44 can slide to switch the colors. As shown in FIG. 8B, the back board 44 may be shaped as a cylinder one half of which is formed of the black back board 44a and the other half of which is formed of the white back board 44b. Rotation of the back board 44 switches the colors.

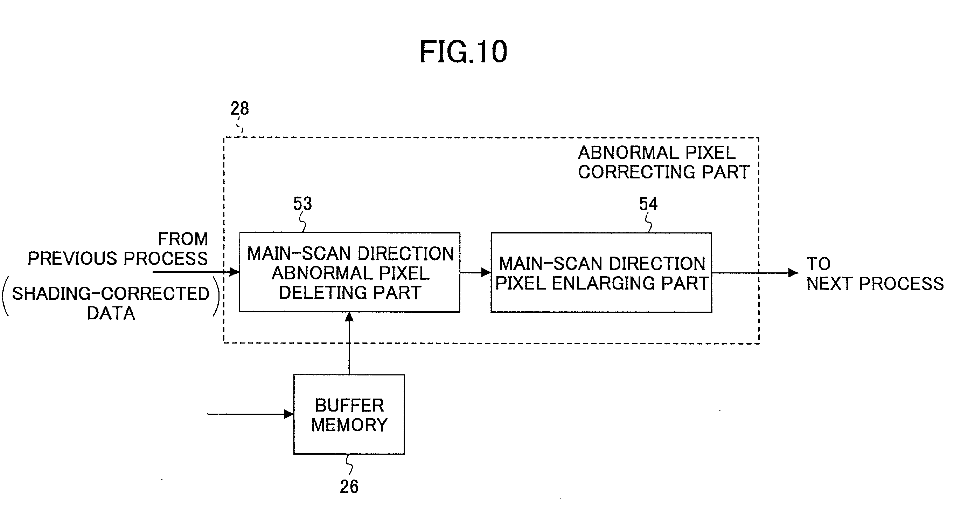

The abnormal pixel detecting part 27 of the image processing part 20 is responsible to detect an abnormal pixel caused by dust on the contact glass. As shown in FIG. 9, the abnormal pixel detecting part 27 comprises a contour emphasizing part 50, a binarization processing part 51 and an OR processing part 52. The abnormal pixel correcting part 28 is responsible to correct the detected abnormal pixel on the basis of image information on the abnormal pixel stored in the buffer memory 26 when the manuscript 13 is read. As shown in FIG. 10, the abnormal pixel correcting part 28 comprises a main-scan direction abnormal pixel deleting part 53 and a main-scan direction pixel enlarging part 54. Based on the corrected image data, the image quality correcting part 29 enhances the corrected image data by using a variety of image processing techniques in accordance with a quality required by an external device connected with the external connecting part 22: an error diffusing process, a dither process, a binarization process, a density conversion, a white-black inversion, a filtering process, a variable power process and a image shifting process. The resulting image data is stored in the image data memory part 21 and is delivered to the external device through the external connecting part 22. Operations executed in the image quality correcting part 29 are determined in accordance with the request of the external device. Thus, no image quality enhancing operation may be executed in the image quality correcting part 29. For example, if all image quality enhancing operation are executed in the external device, only the abnormal pixel correcting process is executed without executing any image quality enhancing operation in the image quality correcting part 29. In this case, the resulting image data is stored in the image data memory part 21 as an original image data.

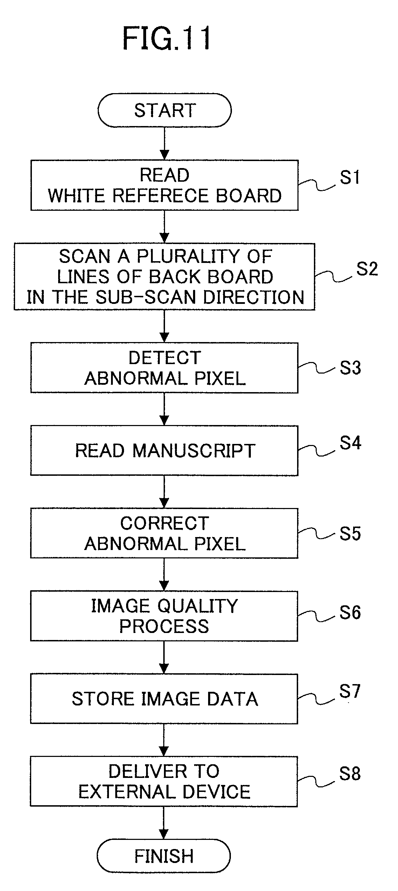

A description will now be given, with reference to a flowchart in FIG. 11, of actions at the time when image data of the manuscript 13 is read under the SDF mode of the image scanning apparatus mentioned above.

In order to read the white reference board 15, the first scanning part 4 now being in the home position 41 temporally moves beneath the white reference board 15, reads illumination distribution of the white reference board 15 and produces shading data to normalize read data. After those tasks, the first scanning part 4 returns to the home position (step S1) Soon after the first scanning part 4 returns, the illuminant 4a illuminates light in a state without any image to read a surface of a contact glass, that is, the back board 44. When the first scanning part 4 reads the back board 44, the image scanning apparatus lets the first scanning part 4 not fixed at the home position 41 but scan a plurality of lines in the sub-scan direction. Then, the image scanning apparatus stores the read data in the buffer memory 26 (step S2). At the storage of the read data in the buffer memory, the buffer control part 25 does not have to maintain the whole image data. It is sufficient to store just a range of image where the image scanning apparatus can detect dust in order to use efficiently an occupied amount of the memory.

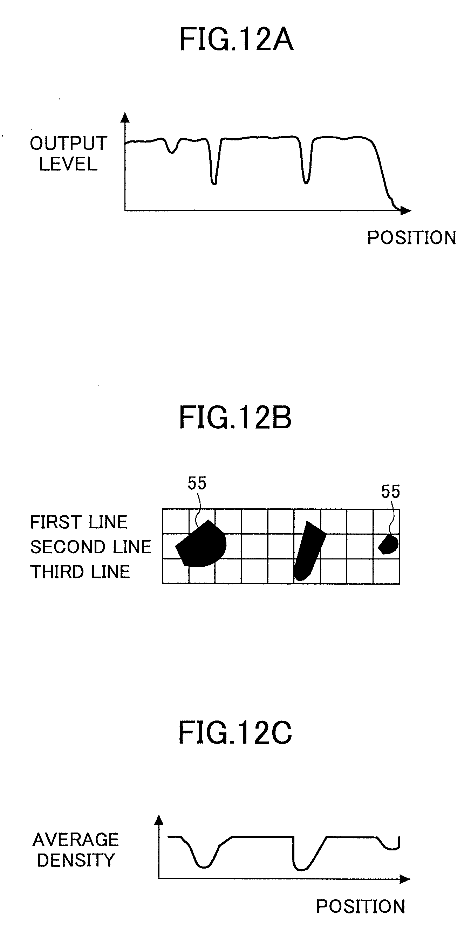

FIG. 12A illustrates a level of an electrical output of the read image in the main-scan direction in a case that the back board 44 is white when the image is read. In the case, a white range of the image has a high level of the electrical output, whereas a black range of the image has a low level of the electrical output. If there is no abnormal pixel caused by dust, the level of the electrical output would become constant at the high level of the white range except both edges of the electrical output. If there are some abnormal pixels caused by dust, the range where the abnormal pixels are lying would have the low level of the black range. FIG. 12B illustrates a case that there are some abnormal pixels. As shown in FIG. 12B, if dust 55 is in some places, the dust 55 can give some influence to other pixels on a plurality of lines in which the dust 55 is read because the dust 55 occupies an area for itself. As illustrated in FIG. 12B, suppose that the dust 55 is lying in a plurality of lines from a first line to a third line and the first scanning part 4 is currently located at a second line where the first scanning part 4 should be located at the reading of the image in a stationary state. In this case, if a position of the line where the first scanning part 4 reads the image fluctuates for some reasons, a position of the dust 55 is also changed slightly. FIG. 12C illustrates an average density obtained when the dust 55 lying in the range from the first line to the third line is projected in the vertical direction. In order to detect accurately an abnormal pixel caused by the dust 55 that occupies a plurality of the lines, the first scanning part 4 additionally scans a plurality of the lines in the sub-scan direction as well as the main-scan direction. There are some reasons that a position in which the first scanning part 4 reads the image fluctuates slightly. Since the first scanning part 4 moves mechanically to a predetermined position, the first scanning part 4 may move to a position different slightly from a predetermined position for the sake of vibration resulting from the manuscript feeding. In addition, some dust on the surface is also likely to move around for the sake of the vibration and airflow while the image of the manuscript 13 is read. In order to overcome the trouble, the first scanning part 4 scans a plurality of the lines in the sub-scan direction, thereby also preventing a noise signal caused by the vibration and other factors.

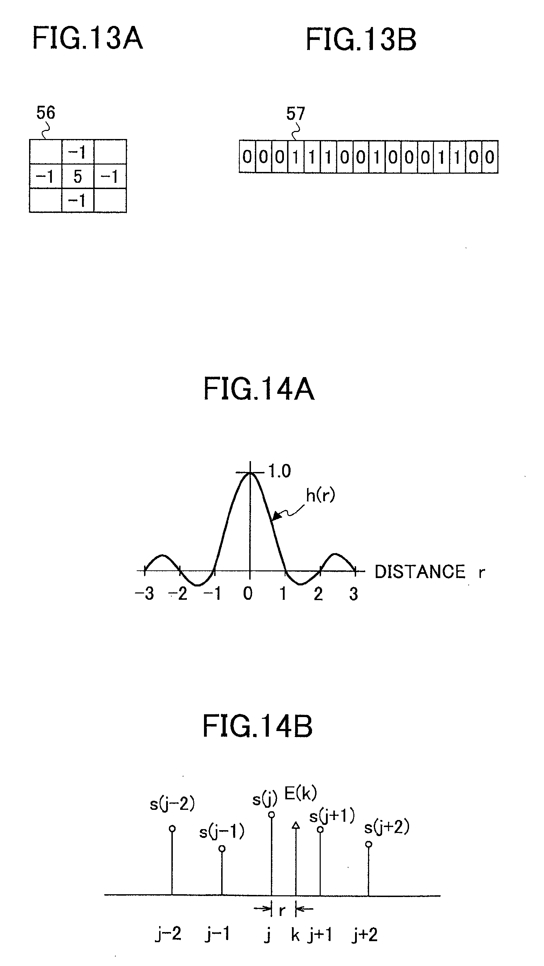

The abnormal pixel detecting part 27 detects an abnormal pixel in image data that has been read in the state without any image by the first scanning part 4 and has been stored in the buffer memory 26 (step S3). In order to detect the abnormal pixel in the image data stored in the buffer memory 26, the contour emphasizing part 50 executes a two-dimensional filtering process by using a filter 56 as shown in FIG. 13A and emphasizes edges of the abnormal pixel to define a boundary of the area occupied by dust 55 so that the abnormal pixel detecting part 27 can use the two-dimensional image stored in the buffer memory 26 to determine appropriately what extent of pixels the abnormal pixel gives influence. Then, a binarization processing part 51 performs binarization for the resulting contour emphasized image on the basis of a predetermined threshold to discriminate between the abnormal pixel and a normal pixel. In addition, an OR processing part 52 performs an OR process for the resulting binarized image data with respect to each of the positions read in the main-scan direction by the first scanning part 4. Namely, for a normal pixel not being in the first line, a fluctuation of a position where the image is read in the sub-scan direction may make the normal pixel abnormal under the influence of the first line. Therefore, the OR processing part 52 performs the OR process for a whole range where the abnormal pixel may emerge so that the abnormal pixel detecting part 27 can consider all pixels in the whole range to be candidates of abnormal pixels. Then, the resulting candidates are related to coordinates in the main-scan direction and are stored in the buffer memory 26. FIG. 13B illustrates data containing abnormal pixels 57 that is stored in the buffer memory 26. In the data 57 shown in FIG. 13B, a position having "0" means that a pixel at the position is normal, and a position having "1" means that a pixel at the position is likely to become abnormal.

After detecting the abnormal pixel, the image scanning apparatus is ready to read the manuscript 13 (step S4). The image data read from the manuscript 13 includes not only image data of the manuscript 13 itself but also information on the dust 55. The abnormal pixel correcting part 28 uses information of an abnormal pixel caused by the dust 55 to remove information of the dust 55 from the read image data and correct the abnormal pixel of the read image data (step 5). Actually, a main-scan direction abnormal pixel deleting part 53 of the abnormal pixel correcting part 28 is responsible to delete the abnormal pixel in the main-scan direction from the image data read from the manuscript 13 with reference to the information on the abnormal pixel caused by the dust 55 in the buffer memory 26. This deletion of the abnormal pixel results in shortening the length of the image data of the manuscript 13 in the main-scan direction. In order to restore the original image data of the manuscript 13, a main-scan direction pixel enlarging part 54 is responsible to enlarge the image data without any abnormal pixels in compensation for the deleted portion of the image data. This enlarging process exploits a resampling process for scaling up and down image data.

The resampling process will now be described. In a scaling process of image data, required data is interpolated by resampling a sampling signal. A convolution operation is preformed for the digital sampling signal. By applying a sampling function h(r) in FIG. 14A for the digital sampling signal, the convolution operation can completely restore a continuous signal corresponding to the digital sampling signal. In a scaling-up process, more sampling points are required to restore data. In a scaling-down process, by contrast, sampling points are decreased by lengthening intervals between sampling points. Although the sampling point r for digital data has a discrete value, it is not necessary that the sampling point r is an integer. Let input digital data be f(r) and resampling data g(r). The g(r) is computed as follows; g(r) = f(r)*h(r), where a notation "*" represents the convolution operation summing all products of the sampling point r and each of points adjacent to the sampling point r.

There are some approximation methods for generating interpolation data except the computation based on the sampling function h. Especially, some approximation formulae such as the nearest pixel substitution method, the method of distance linear distribution between adjacent pixels and the method of three-dimensional function convolution operation related to the sampling function are often used for the sake of some constraints related to hardware configuration in use. The nearest pixel substitution method substitutes a resampling point for original input data nearest to a resampling point. The method of distance linear distribution between adjacent pixels assigns a density according to distances between a resampling point and each of the adjacent pixels. The method of three-dimensional function convolution operation approximates a sampling function based on a trigonometric function to a three-dimensional function. The resulting three-dimensional function is used to compute interpolation when densities of pixels adjacent to a resampling point are distributed to assign a density of the resampling point. Since these approximation methods aims at implementation in hardware, an appropriate method should be selected on the basis of a tradeoff between required image quality and resources required to implement the method on the hardware.

FIG. 14B illustrates interpolation for resampling positions. When a processor and a controller are used to perform the interpolation, any constraint of hardware configuration to the above-mentioned approximation can be ignored. Although there still remains a constraint on a tradeoff between time and a degree of approximation, the degree of approximation is improved under programmable configuration. In FIG. 14B, white circles represent original image data, and a density of a position j is notated as a S(j). Also, a white triangle represents interpolation data E(k) at a resampling point k.

The main-scan direction enlarging part 54 supplies a resampling position to perform the scaling-up process and executes the convolution operation for the resampling position. When the computation is performed by a programmable processor, the computation for the above-mentioned resampling process can be performed with high precision because of no constraint on the hardware in use.

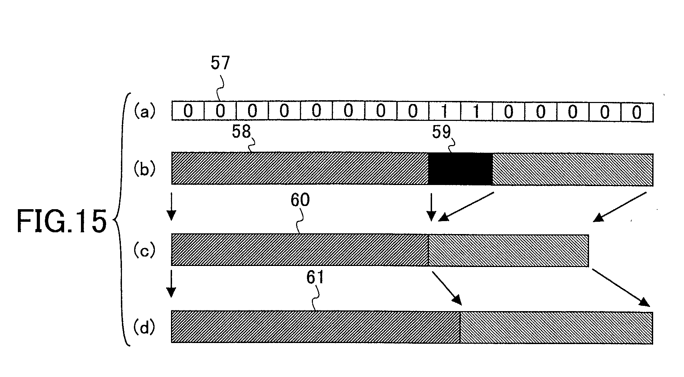

A description will now be given, with reference to FIG. 15, of a sequence of processes for the abnormal pixel correcting part 28 to delete abnormal pixels in the image data of the manuscript 13 and then enlarge the resulting image data. FIG. 15-(a) illustrates data containing abnormal pixels 57 that have been detected in the abnormal pixel detecting part 27 and stored in the buffer memory 26. In FIG. 15-(a), a position containing "0" means that a pixel at the position is normal, and a position containing "1" means that a pixel at the position is likely to become abnormal. Image data 58 in FIG. 15-(b) is formed of a line of pixels in the sub-scan direction that is extracted from image data of the manuscript 13. Pixels corresponding to two positions with "1" show up as images with a black streak 59. In FIG. 15-(c), image data 60 results from deletion of the two pixels in the main-scan direction causing the images with the black streak 59. When the images with the black streak 59 are deleted, the main-scan direction abnormal pixel deleting part 53 actually skips the reading of the two positions corresponding to abnormal pixels at access to a sequence of pixel data 57. After skipping, the main-scan direction abnormal pixel deleting part 53 subsequently starts to read a position of the next normal pixel in the sequence of pixel data 57, thereby deleting the abnormal pixels from the image data containing the two abnormal pixels. Then, the main-scan direction pixel enlarging part 54 enlarges the resulting image data 60 just enough long to supply an enlarged image data 61 of a predetermined length. In this scaling-up process, there are two methods to interpolate a deleted portion. One method interpolates the deleted portion by using the whole remaining image data. The other method interpolates the deleted portion by using pixels of the remaining image data that are in the neighborhood of the deleted portion. If interpolated by the former method, resampling information prevails to the whole range of the image, whereby an inherent vertical streak hardly becomes noticeable. On the other hand, if interpolated by the latter method, pixels indifferent from the deletion can remain their original values and it can take less time to perform the scaling-up process because of restricted range where the process is performed.

For the image data 61, the image quality correcting part 29 performs a predetermined image quality process (step S6), and then the resulting image data is stored in the image data memory part 21 (step S7). The image data in the image data memory part 21 is delivered to an external device through the external connection part 22 (step S8).

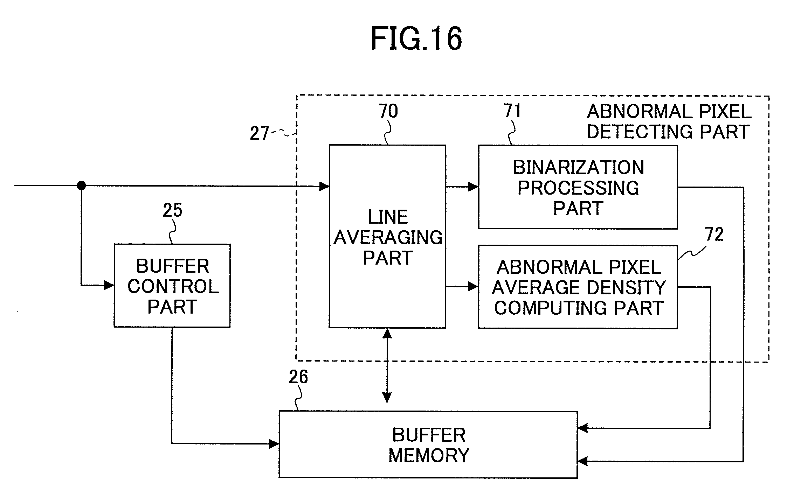

In the above description of the abnormal pixel detecting part 27, the case has been described that the abnormal pixel detecting part 27 comprises the contour emphasizing part 50, the binarization processing part 51 and the OR processing part 52. On the other hand, as shown in a block diagram in FIG. 16, the abnormal pixel detecting part 27 may comprise a line averaging part 70, a binarization processing part 71 and an abnormal pixel average density computing part 72. In this case, the abnormal pixel detecting part 27 performs a prescanning process in a state without the manuscript 13. The abnormal pixel detecting part 27 not completes prescanning for short time but spends as much time prescanning as reading the manuscript 13 by moving the first scanning part 4. While the image is read, vibration is caused, thereby incurring emergence of dust. The abnormal pixel detecting part 27 reads an image containing an abnormal pixel caused by dust anticipated. At this time, the abnormal pixel detecting part 27 lets the first scanning part 4 move slightly in the sub-scan direction. Also, it is not necessary to store read image data in a two-dimensional form in the buffer memory 26. To prevent an accidental noise, the line averaging part 70 averages image data between the lines, and the resulting averaged image data is stored in the buffer memory 26. Namely, the first scanning part 4 begins to read the image data with the first line, and the read image data is stored in the buffer memory 26. A series of the image data to be read hereafter from a plurality of the lines is considered to be under the influence of vibration caused by the stepping motor and mechanical movements of the first scanning part 4. For the remaining lines of the image data, the line averaging part 70 computes a weighted-average of image data being currently stored in the buffer memory 26 and a line of the image data that the first scanning part 4 is currently reading with respect to each coordinate in the main-scan direction. The resulting average image data is stored again in the buffer memory 26, which is used for the averaging process of image data in the next line.

After the line averaging part 70 performs the averaging process for the last line and the final average image data is stored in the buffer memory 26, the binarization processing part 71 starts to detect an abnormal pixel for the image data that have been read in the state without any image, that is, from a null image. The binarization processing part 71 performs a binarization process for image data stored in the buffer memory 26 on the basis of a predetermined threshold. Then, the binarization processing part 71 relates normal pixels and abnormal pixels to coordinates in the main-scan direction and the resulting data is stored in the buffer memory 26. For the average image data in the sub-scan direction, the abnormal pixel average density computing part 72 additionally performs an averaging process in the main-scan direction and computes an average density of a detected abnormal pixel. Then, the abnormal pixel average density computing part 72 stores the computed average density in another address in the buffer memory 26. As mentioned above, the abnormal pixel detecting part 27 comprising a line averaging part 70, a binarization processing part 71 and an abnormal pixel average density computing part 72 can not only detect a core range of the dust causing the abnormal pixel but also checks a noise condition resulting from reading the manuscript 13.

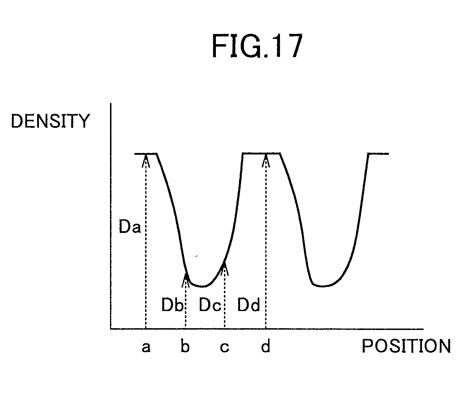

A description will now be given of another example in which the abnormal pixel average density computing part 72 computes density of an abnormal pixel. As shown in FIG. 17, if there is some dust or a sensor has some trouble, the abnormal pixel data represents a sharp density fluctuation at some positions. For example, suppose that sampling points a, b, c and d have densities Da, Db, Dc and Dd, respectively. If the sampling points have deviations of their densities out of a predetermined range, the abnormal pixel average density computing part 72 considers the sampling points out of the range to be candidates of an abnormal pixel and computes density gradients of the sampling points. As shown in FIG. 17, if the density level decreases from the point a to the point b and increases from the point c to the point d, the abnormal pixel average density computing part 72 can identify positions of the abnormal pixels in a range between the point a and the point d. Then, the abnormal pixel average density computing part 72 computes an average density of the abnormal pixels, which is stored in the buffer memory 26.

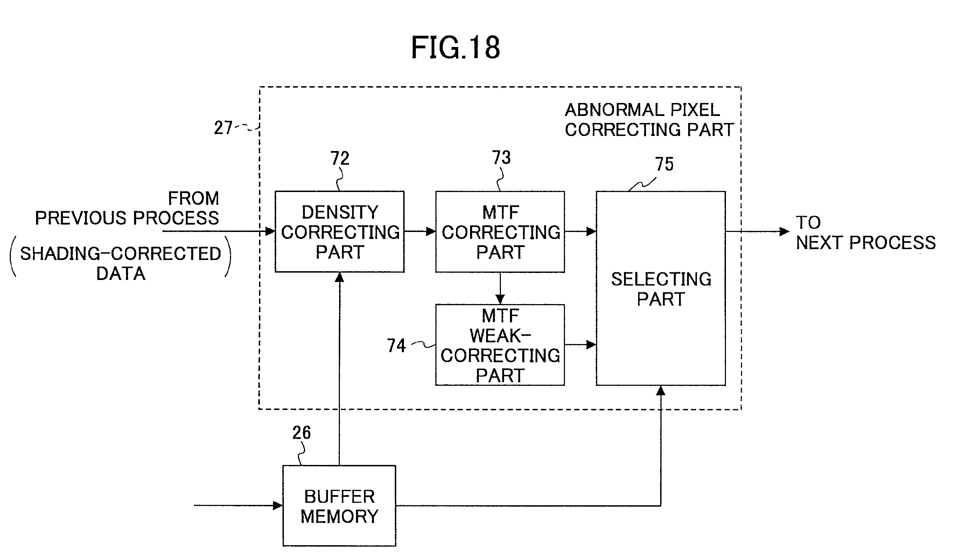

A description will now be given of correction of the image data read from the manuscript 13 on the basis of a position and a density of an abnormal pixel. As shown in a block diagram in FIG. 18, the abnormal pixel correcting part 28 comprises a density correcting part 72, an MTF correcting part 73, an MTF weak-correcting part 74 and a selecting part 75. Regarding the abnormal pixel information stored in the buffer memory 26, the density correcting part 72 refers to density information of an abnormal pixel that has been detected in the abnormal pixel detecting part 27 with respect to both in the main-scan direction and in the sub-scan direction. Then, the density correcting part 72 subtracts an average density computed by the abnormal pixel detecting part 27 from a density of the abnormal pixel to correct the density level of the abnormal pixel. Then, the MTF correcting part 73 and the MTF weak-correcting part 74 perform sharpness correction for the resulting image data. The MTF correcting part 73 corrects the image data in accordance with a normal level of sharpness, and the MTF correcting part 74 corrects pixels in the neighborhood of the abnormal pixel in accordance with a lower level of sharpness. As a result, a black streak caused by the abnormal pixel almost disappears. Although the black streak cannot be removed completely and there remains a slight trace of the black streak, information included in the manuscript can be restored. Also, through the slight trace, it can be determined whether or not the correction for the black streak has been performed, thereby urging an operator to observe pixels surrounding the abnormal pixel carefully.

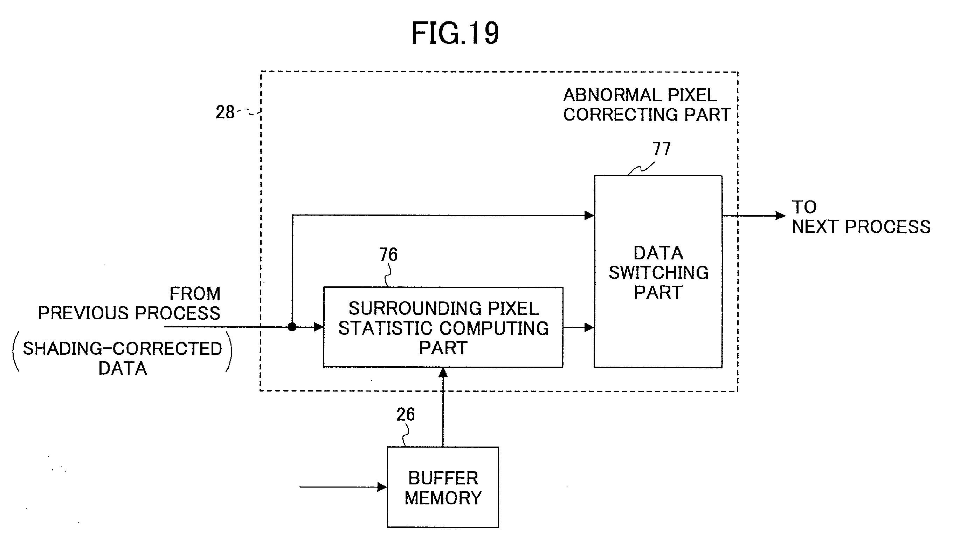

On the other hand, as shown in a block diagram in FIG. 19, the abnormal pixel correcting part 28 may comprise a surrounding pixel statistic operating part 76 and a data switching part 77 to correct the image data of the manuscript 13 through interpolation by using statistic data. In this case, when the image of the manuscript 13 is read, the surrounding pixel statistic operating part 76 computes statistics helpful to maintain continuity between an abnormal pixel to be corrected and its surrounding pixels with reference to abnormal pixel data stored in the buffer memory 26. The statistics may include a density average and a density gradient with respect to a plurality of lines to be corrected. The statistics may include an autocorrelation of a discrete dot, which is an informative statistic to maintain the continuity. According to the statistics derived from the surrounding pixel statistic operating part 76, the data switching part 77 generates a substitution pixel to substitute the abnormal pixel in the read image data for the substitution pixel.

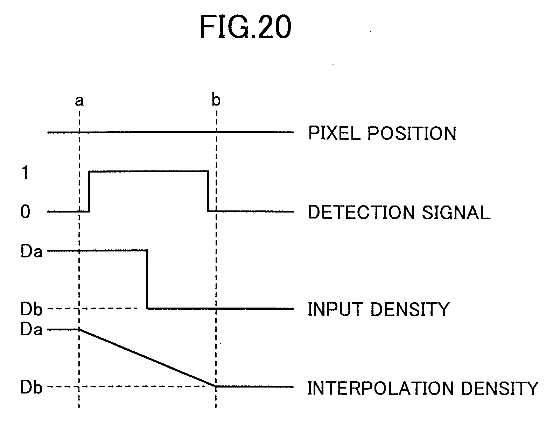

A description will now be given, with reference to FIG. 20, of an example in which the abnormal pixel correcting part 28 uses the statistics to correct the read image data. The abnormal pixel correcting part 28 maintains a flag in a position where an abnormal pixel has been detected. A detected signal "1" means that the pixel in the position is abnormal, and a detected signal "0", by contrast, means that the pixel in the position is normal. The abnormal pixel correcting part 28 determines reference pixels, which serve to correct the abnormal pixels, in the neighborhood of the detected abnormal pixels. The reference pixels are points a and b. The point a is located at the position before the detected abnormal pixel, and the point b is located at the position after the detected abnormal pixel. These points a and b should be located at positions where the abnormal pixel has no influence on the points. The abnormal pixel correcting part 28 performs sampling of density information of the read image data from the manuscript 13. Let an input density at the point a be Da and an input density at the point b be Db. The abnormal pixel correcting part 28 uses the input densities Da and Db to compute correction density. Linear interpolation is a statistical correcting method to compute the correction density. A density step ΔD is computed as follows; ΔD = (Db - Da) / (b - a). A density of each abnormal pixel is substituted for an interpolating density D as follows; D = Da + n×ΔD, where the notation n represents a distance between the point a and a position of the abnormal pixel. In a case that the manuscript 13 is solid, that is, the densities Da and Db have the almost same value, the correction density of an abnormal pixel resulting in a vertical streak is substituted for the input density Da or Db. On the other hand, in a case that there is a difference of the density between the points a and b, if the abnormal pixel should is corrected to have the same density as the input density Da, the parameter gives adverse influence to a corrected density of the abnormal pixel, thereby producing density mixture with neighboring pixels of the abnormal pixel in the shape of the vertical streak. Although the resulting image under the latter case makes a greater deal of improvement than the vertical streak showing up without any correction, the resulting image is inferior to the original image of the manuscript 13. Accordingly, the operator needs to check whether or not the correction is useful.

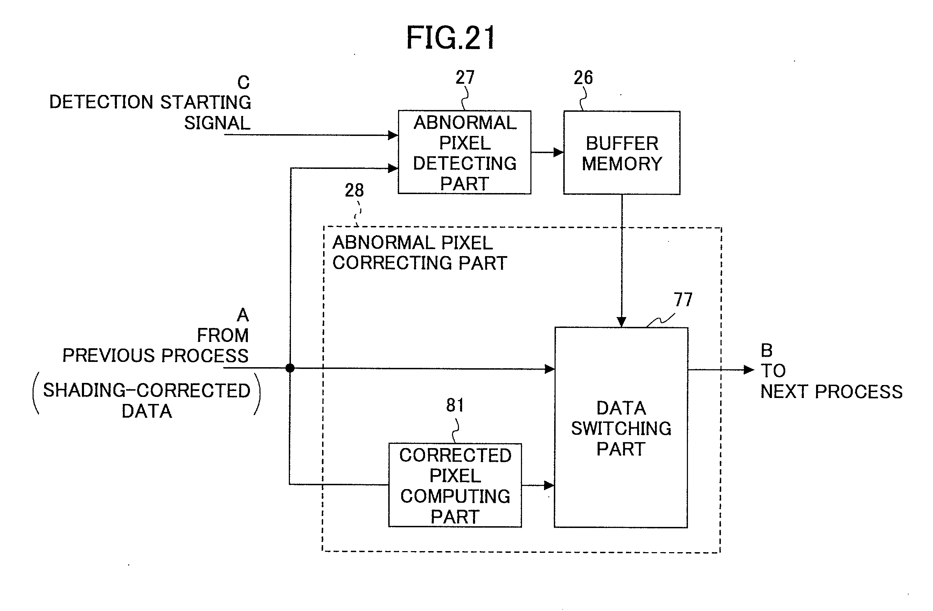

As shown in a block diagram in FIG. 21, the abnormal pixel correcting part 28 may comprise a corrected pixel computing part 81 and a data switching part 77. In this case, the reading part 1 reads a null-image in order to detect dust on the surface of the contact glass before the manuscript 13 is actually read. The detection process starts by receiving an enable signal of a detection starting signal C. The abnormal pixel detecting part 27 receives the image data to be detected, binarizes a line of the image data and stores the binarized line of the image data in the buffer memory 26. In this case, it is assumed that an abnormal pixel is caused by an object on the surface of the contact glass that obstructs an input of the reflected light to the CCD 7. At the reading of the white back board 44b, if black dust is lying on the surface of the contact glass, a density level of the corresponding pixel becomes high. On the other hand, at the reading of the black back board 44a, if white dust is lying on the surface of the contact glass, a density level of the corresponding pixel becomes low. At the reading of the white back board 44b, in the binarized data in the buffer memory 26, a pixel at a position where "0" is written is normal and, by contrast, a pixel at a position where "1" is written is abnormal. On the other hand, at the reading of the black back board 44a, in the binarized data in the buffer memory 26, a pixel at a position where "1" is written is normal and, by contrast, a pixel at a position where "0" is written is abnormal.

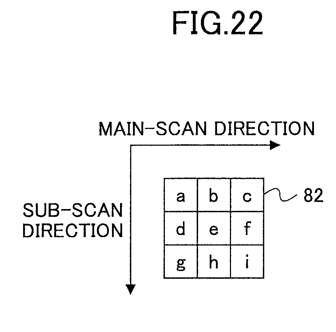

Then, the SDF 10 delivers the manuscript 13 on the surface of the contact glass. The CCD 7 reads each line of the delivered manuscript 13 as a line data. After completing the shading correction, the resulting image data is delivered to the data switching part 77 and the corrected pixel computing part 81 as input image data A. The corrected pixel computing part 81 generates a 3×3 pixel matrix 82 whose center of pixels is e as shown in FIG. 22. Using the pixel matrix 82, the corrected pixel computing part 81 performs correction if the pixel e is abnormal. The data switching part 77 performs with reference to data stored in the buffer memory 26 as follows; If the pixel concerned has the signal "1" for the white back board 44b or the signal "0" for the black board 44a, the data switching part 77 delivers the image data produced by the corrected pixel computing part 81 to the next process as image data B. On the other hand, if the pixel concerned has the signal "0" for the white back board 44b or the signal "1" for the black board 44a, the data switching part 77 delivers the input image data A to the next process. In this manner, the image scanning apparatus surely detects and corrects an abnormal pixel caused by the dust.

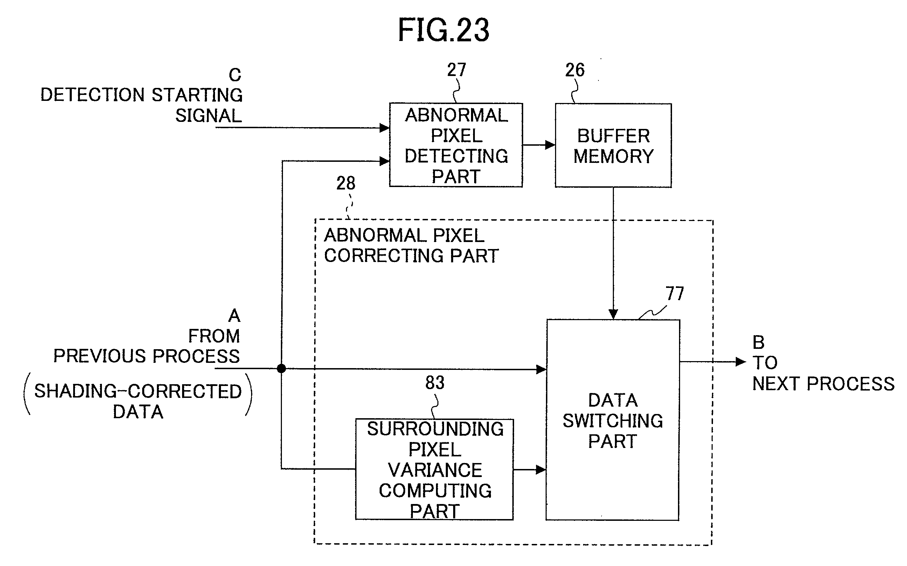

As shown in FIG. 23, the abnormal pixel correcting part 28 may comprise a surrounding pixel variance computing part 83 and the data switching part 77. In this case, the surrounding pixel variance computing part 83 computes variances of the image data with respect to both the main-scan direction and the sub-scan direction from the surrounding pixels for the input image data A. When the pixel e should be corrected, the 3×3 pixel matrix 82 is used as shown in FIG. 22 for the correction under the surrounding pixel variance computing part 83. The 3×3 pixel matrix 82 has pixels a, b, c, d, f, g, h and i surrounding the pixel e to be corrected. Let each density of the surrounding pixels be Da, Db, Dc, Dd, Df, Dg, Dh and Di, respectively. For example, suppose that the pixels b, e and h are abnormal. Then, these pixels are set aside at the correction. The correction data is selected among variances of three directions: a horizontal direction, a right-rising diagonal and a right-falling diagonal, where the variances in the horizontal direction, in the right-rising direction and in the right-falling direction are computed by the following formulae, respectively:
The horizontal direction; {Dd-(Dd+Df)/2}² + {Df-(Dd+Df)/2}².
The right-rising direction; {Dc-(Dc+Dg)/2}² + {Dg-(Dc+Dg)/2}².
The right-falling direction; {Da-(Da+Di)/2}² + {Di-(Da+Di)/2}².
Among the three variances, a direction with a minimal variance is selected and the pixel e to be corrected is interpolated by using an average in the selected direction. For example, if the variance in the horizontal direction is minimal, the pixel e to be corrected is interpolated by an average (Dd+Df)/2.

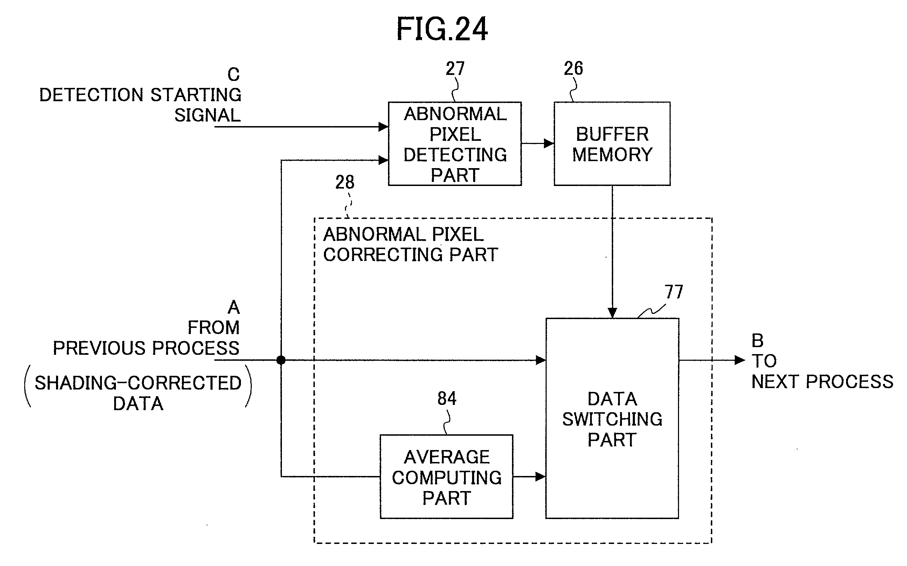

As shown in a block diagram in FIG. 24, the abnormal pixel correcting part 28 may comprise an average computing part 84 and the data switching part 77. The average computing part 84 computes the density level De of the pixel e to be corrected from the density levels of the surrounding pixels as follows;
De = (Da + Dc + Dd + Df + Dg + Di)/6, where the pixels b, e and h are set aside because it is assumed that these three pixels are abnormal.

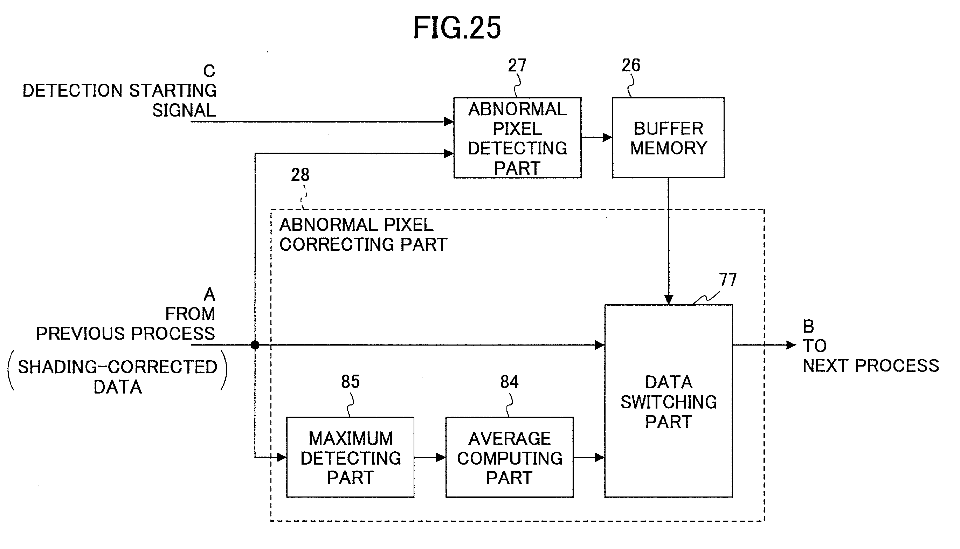

As shown in a block diagram in FIG. 25, the abnormal pixel correcting part 28 may comprise a maximum detecting part 85, the average computing part 84 and the data switching part 77. In this case, the maximum detecting part 85 sorts the left-side pixels a, d and g in the 3×3 pixel matrix 82 in descending order regarding the density level. Suppose that Da > Dd > Dg. Then, the maximum detecting part 85 sorts the right-side pixels c, f and i in the 3×3 pixel matrix 82 in the same order. Suppose that Di > Df > Dc. The maximum detecting part 85 delivers the left-side maximal density level Da and the right-side maximal density level Di to the average computing part 84. The average computing part 84 computes an average De = (Da+Di)/2 and delivers the result to the data switching part 77. If the pixel e is abnormal, the data switching part 77 delivers the average density De to the next process. If the pixel e is normal, the data switching part 77 delivers the input data A to the next process as an input data B.

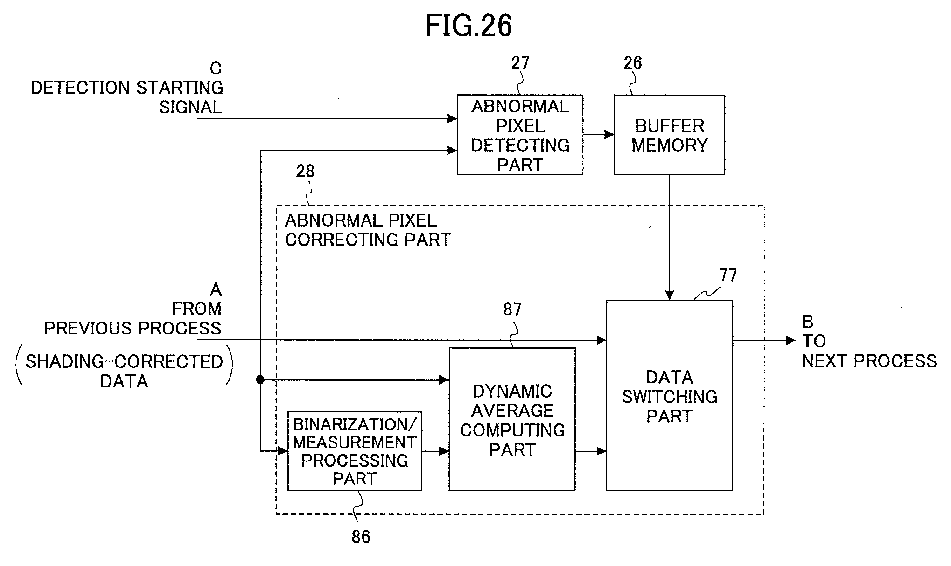

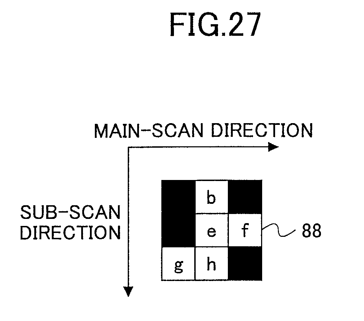

As shown in a block diagram in FIG. 26, the abnormal pixel correcting part 28 may comprise a binarization/measurement processing part 86, a dynamic average computing part 87 and the data switching part 77. In this case, the binarization/measurement processing part 86 binarizes surrounding pixels of the 3×3 pixel matrix 82, counts the number of "0"s, which is notated as an NW and the number of "1"s, which is notated as an NB and delivers position information of pixels belonging to a collection of pixels with bigger number to the dynamic average computing part 87. The dynamic average computing part 87 computes an average density by using the position information delivered by the binarization/measurement processing part 86 and the input image data A in the matrix. For example, it is assumed that a result of the binarization is shown in a matrix 88 in FIG. 27. Since the pixels b, e and h are assumed as abnormal pixels, the NB is equal to 4 and the NW is equal to 2. Using the pixels a, c, d and i whose collection has the bigger number 4, the dynamic average computing part 87 computes the density De as follws;
De = (Da + Dc + Dd + Di)/4, and delivers the density De to the data switching part 77. If the pixel e is abnormal, the data switching part 77 delivers the density De to the next process. If the pixel e is normal, the data switching part 77 delivers the input data A to the next process as an input data B.

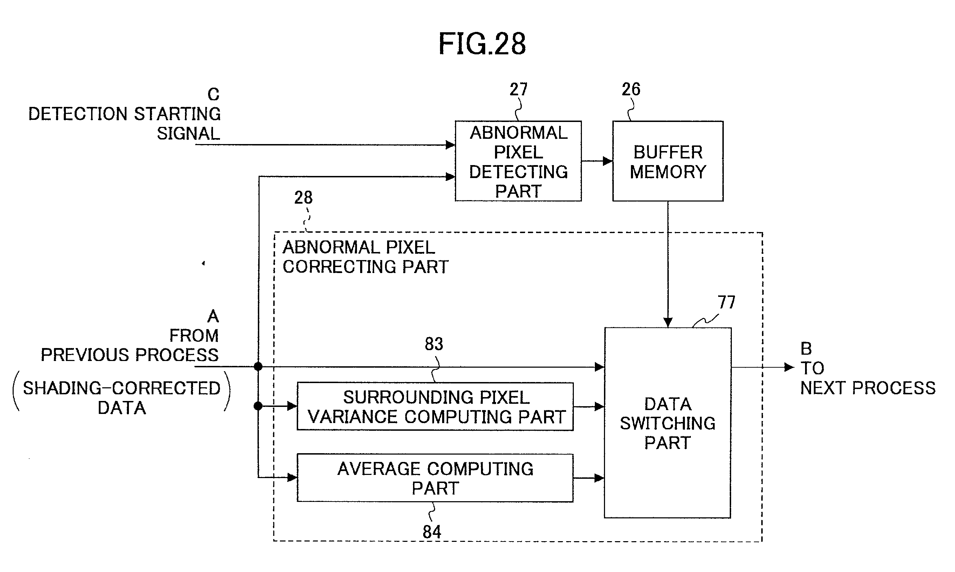

As shown in a block diagram in FIG. 28, the abnormal pixel correcting part 28 may comprise the surrounding pixel variance computing part 83, the average computing part 84 and the data switching part 77. It is assumed that the image scanning apparatus has two modes, a character mode and a picture mode. The character mode is suitable for processing the manuscript 13 whose contents are mainly formed of characters. The picture mode is suitable for processing a printed picture formed of dots. Suppose that a mode signal D has "0" in the character mode and "1" in the picture mode. When the mode signal D has "0", the surrounding pixel variance computing part 83 performs correction by computing an average of surrounding pixels in the direction with a minimal variance. When the mode signal D has "1", the average computing part 84 performs correction by computing an average of surrounding pixels. According to the position information of an abnormal pixel and the mode signal D, if the pixel e is abnormal, the data switching part 77 delivers the resulting density De to the next process, and if the pixel e is normal, the data switching part 77 delivers the input data A to the next process as an input data B.

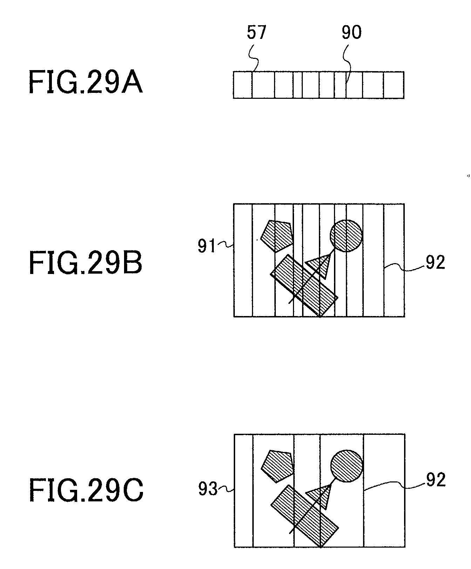

A result of the correction is illustrated in pattern diagrams in FIG. 29A through FIG. 29C. FIG. 29A illustrates data containing abnormal pixel 57 stored in the buffer memory 26. In this diagram, a black streak 90 is information indicating a position of a abnormal pixel. FIG. 29B illustrates an image 91 read from the manuscript 13. In this diagram, there are many black streaks 92 caused by abnormal pixels, thereby having trouble transferring information of the manuscript 13. FIG. 29C illustrates an image 93 resulting from correcting the image 91. In the resulting image 93, a considerable number of black streaks are deleted. The image data 93 is interpolated by using surrounding pixels in the main-scan direction. As a result, if a corrected range originates from a white-solid range or a black-solid range, corrected density does not deteriorate because the correction uses uniform density of the solid range. However, a density difference may be identified from the neighborhood of the abnormal pixel, because the correction uses a variance of the density level. The abnormal pixel data 57 and the image 93 are displayed under the operation displaying part 23 so that an operator can set a level of correction freely. As a result, the operator can obtain an image that the operator recognizes to be appropriate. In this case, when the correction is performed to the extent that the black streaks are completely deleted, a dot range of the manuscript 13 deteriorates in comparison with the original one. Even if the correction is not performed to the extent, the number of the black streaks 92 decreases as shown in FIG. 29C. Accordingly, there is great improvement on image recognition.

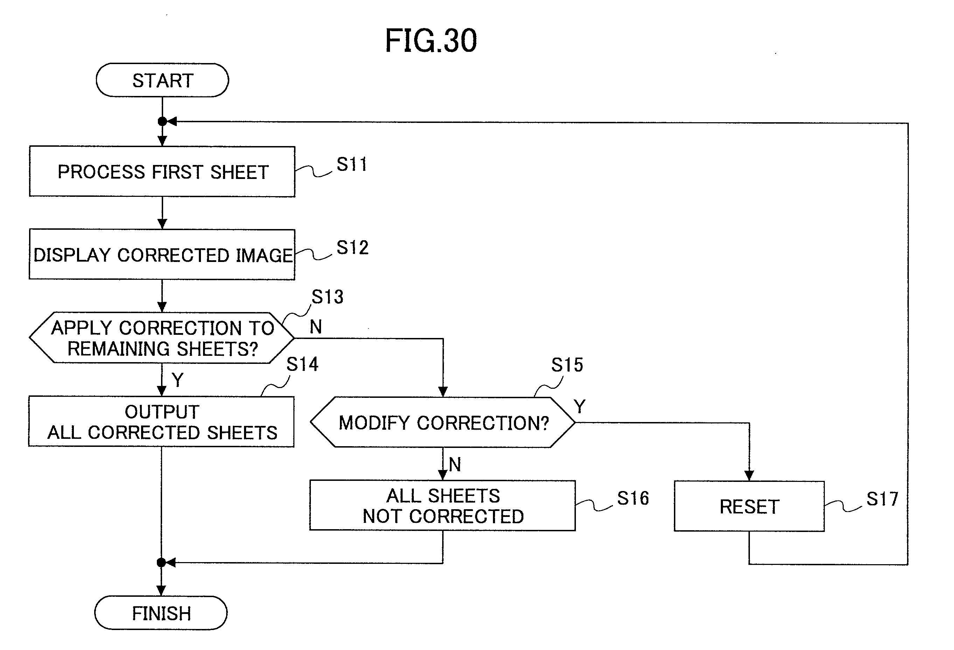

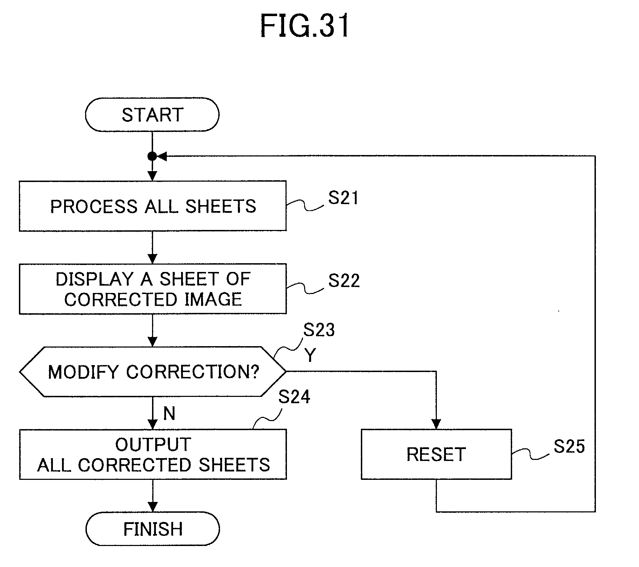

A description will now be given, with reference to flowcharts of FIG. 30 and FIG. 31, of procedures for a preview process of the abnormal pixel data 57 and the corrected image 93. Suppose that there are a plurality of the manuscripts 13. In this setting, two possibilities regarding the preview process are considered. One is the case that a result of preview process is determined on the basis of just a first sheet of the manuscripts 13. In this case, after the first sheet of the manuscripts 13 is read and the correcting process is performed for the read image (step S11), the abnormal pixel data 57 in the buffer memory 26 and the corrected image 93 in the image data memory part 21 are positioned so that positions of the common abnormal pixels contained in the two data can be just fitted. Then, the result is displayed on the operation displaying part 23. For the displayed result, the preview process prompts an operator to set hereafter processes (step S12). Through the display, the operator can check the extent of the density mixture in a dot range and the lack of character information caused by vertical streaks. If the operator determines to maintain current setting in order to incorporate the correction result for hereafter processes (step S13), the operator instructs the abnormal pixel correcting part 28 to perform the same correction for all sheets of the manuscripts 13 (step S14). When all sheets of the manuscripts 13 are corrected, the detecting process of the abnormal pixels is performed for each sheet of the manuscripts 13. Accordingly, a detection result of the abnormal pixels may differ from each other depending on reading conditions.

If the operator determines to alter the current setting in order not to incorporate the correction result, the operator instructs the abnormal pixel correcting part 28 to alter a condition of the correcting process and performs correction (step S15). In this case, if the operator is not so concerned about the vertical streaks and there is outstanding influence caused by the image correction because the manuscripts 13 are mainly formed of halftones, the operator instructs the abnormal pixel correcting part 28 not to perform correction without interpolating any pixel. The operator then instructs the abnormal pixel correcting part 28 not to correct any sheet of the manuscripts 13 (step S16). If the operator is concerned about vertical streaks and there is outstanding influence caused by the image correction, the operator alters a parameter for the abnormal pixel detection or a parameter involved in a corrected range on the operation displaying part 23 in order to perform correction and read image again. If the operator realizes the limited improvement of the image quality just through the alternation of the parameters, the operator cleans up the reading surface of the SDF 10 to remove factors causing trouble and read again (step S17) .

The other is the case that all sheets of the manuscripts 13 are processed and the operator determines the whole processes from one of the sheets. As shown in FIG. 31, after the image scanning apparatus reads all of the sheets and performs the correcting process for the abnormal pixels (step S21), the preview process displays an arbitrary sheet of the abnormal pixel data 57 stored in the buffer memory and the corrected image 93 stored in the image data memory part 21 on the operation displaying part 23 (step S22). When one sheet of the corrected image 93 is displayed, the operator operates the operation displaying part 23 to select a preview image of an arbitrary sheet of the manuscripts 13. Through the display, the operator determines whether or not the correcting process should be valid (step S23). If the operator realizes that the correction is performed successfully, the operator maintains the current status and transfer the corrected image 93 to an external device (step S24). If the operator realizes that the correction is unsuccessful, the operator alters the current status (step S25) and the manuscripts are read one more time (step S21).

In this manner, a high quality image without any black and white streak caused by an abnormal pixel is obtained.

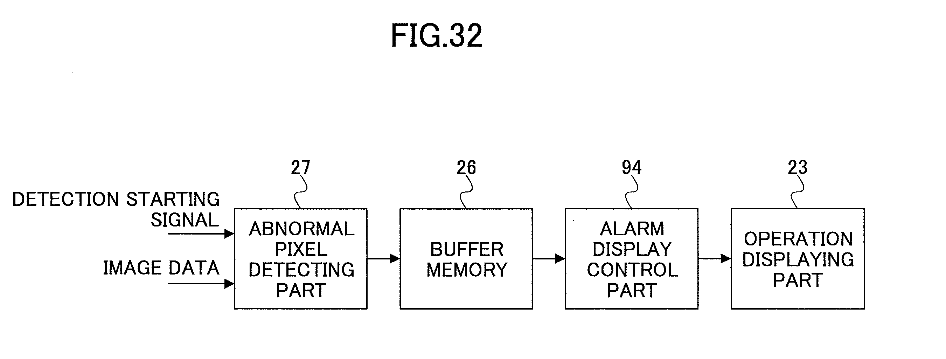

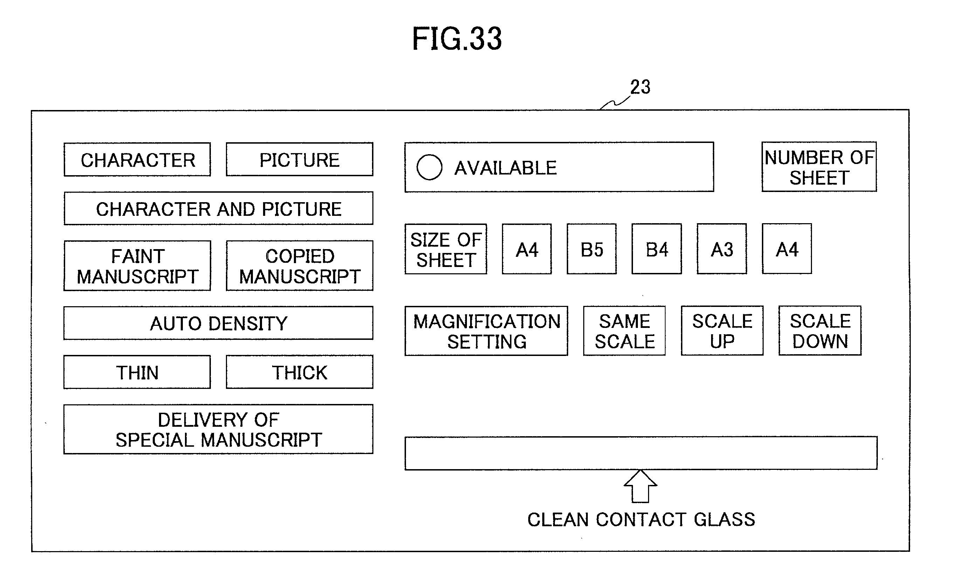

The description has been given of the case that when the abnormal pixel detecting part 27 detects an abnormal pixel caused by dust on the surface of the contact glass, the abnormal pixel correcting part 28 corrects the abnormal pixel. However, if there remains the dust on the surface of the contact glass, an abnormal pixel would be detected again. In order to prevent this situation, as shown in a block diagram in FIG. 32, when the abnormal pixel detecting part 27 detects an abnormal pixel caused by dust on the surface of the contact glass, the abnormal pixel detecting part 27 sends an abnormal pixel detection signal to an alarm display control part 94. When the alarm display control part 94 receives the abnormal pixel detection signal, the alarm display control part 94 lets the operation displaying part 23 display information indicating that the contact glass should be cleaned up. The alarm display control part 94 identifies a position on the contact glass where dust is lying from a position of the abnormal pixel contained in the abnormal pixel detection signal. As shown in FIG. 33, the operation displaying part 23 designates the position by an arrowhead and displays a message "Clean the surface of the contact glass." to urge the operator to clean up the contact glass.

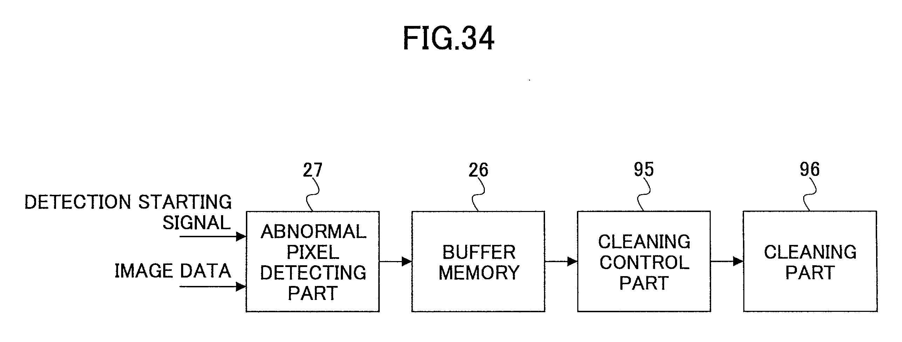

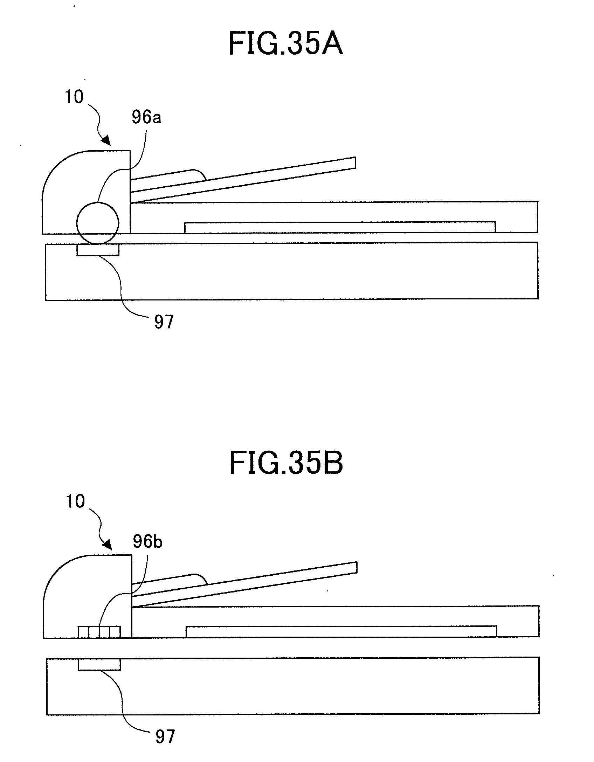

Also, when an abnormal pixel is detected, the image scanning apparatus may clean the contact glass automatically. In this case, as shown in a block diagram in FIG. 34, when the abnormal pixel detecting part 27 detects an abnormal pixel caused by dust on the surface of the contact glass, the abnormal pixel detecting part 27 sends the abnormal pixel detection signal to a cleaning control part 95. When receiving the abnormal pixel detection signal, the cleaning control part 95 lets a cleaning part 96 clean up the surface of the contact glass. As shown in FIG. 35A, the cleaning part 96 may have a rolling cleaning part 96a at a position tangential to a contact glass 97 of the SDF 10. Also, as shown in FIG. 35B, an air blowout part 96b is installed in the SDF 10 so that the air can blow out dust on the contact glass 97. In this manner, the automatic removal of the dust prevents an abnormal pixel to obtain a high quality image reliably.

The present invention is not limited to the specifically disclosed embodiments, and variations and modifications may be made without departing from the scope of the present invention.

The present application is based on Japanese priority application No. 2001-328888 filed October 26, 2001, the entire contents of which are hereby incorporated by reference.

## Claims

1. An image processing apparatus for processing image data read from a manuscript by an image scanning apparatus illuminating light from an illuminant to said manuscript that is delivered by a manuscript delivery part and receiving reflected light from a surface of said manuscript by a photoelectric converting part to convert into digital data, comprising:
an abnormal pixel detecting part moving said image scanning apparatus by a predetermined small distance to read a null-image part before said image scanning apparatus reads said manuscript and detecting an abnormal pixel from a plurality of lines in image data read from said null-image part; and
an abnormal pixel correcting part correcting an abnormal pixel in said image data read from said manuscript by said image scanning apparatus on the basis of information regarding said abnormal pixel detected by said abnormal pixel detecting part.

2. The image processing apparatus as claimed in claim 1, further comprising a white back board at a position where light is illuminated from said illuminant of said image scanning apparatus, wherein said abnormal pixel detecting part checks whether or not there is black dust on a glass surface that obstructs said reflected light on the basis of information regarding image data read from said white back board before said manuscript is delivered.

3. The image processing apparatus as claimed in claim 1 or 2, further comprising a black back board at a position where light is illuminated from said illuminant of said image scanning apparatus, wherein said abnormal pixel detecting part checks whether or not there is white dust on a glass surface that obstructs said reflected light on the basis of information regarding image data read from said black back board before said manuscript is delivered.

4. The image processing apparatus as claimed in claim 1, further comprising a back board having a white back board and a black back board at a position where light is illuminated from said illuminant of said image scanning apparatus, wherein said abnormal pixel detecting part checks whether or not there are black dust and white dust on a glass surface that obstructs said reflected light on the basis of information regarding image data read from said white back board and said black back board in a manner in which said back board slides or rotates to switch said white back board and said black back board alternately before said manuscript is delivered.

5. The image processing apparatus as claimed in claim 1, 2, 3 or 4, wherein said abnormal pixel detecting part conducts two-dimensional search for a candidate of abnormal pixels in said image data from a plurality of lines in said image data read from said null-image part and detects a maximal range of a one-dimensional projection while the image scanning part is still at a predetermined position.

6. The image processing apparatus as claimed in any one of claims 1 to 5, wherein said abnormal pixel detecting part takes an average in the sub-scan direction of a plurality of lines in said image data read from said null-image, binarizes an averaged image data to detect an abnormal pixel, and takes an average in the main-scan direction of said averaged image data in the sub-scan direction to compute a density of said abnormal pixel.

7. The image processing apparatus as claimed in any one of claims 1 to 6, wherein said abnormal pixel correcting part has an abnormal pixel deleting part for deleting a range including an abnormal pixel detected by said abnormal pixel detecting part from image data read by said image scanning apparatus on the basis of information on a position of said abnormal pixel and a pixel enlarging part for enlarging a length of a deleted image data to a length of said image data read by said image scanning apparatus.

8. The image processing apparatus as claimed in any one of the preceding claims, wherein said abnormal pixel correcting part has a density correcting part for decreasing a density of pixels in a range including an abnormal pixel detected by said abnormal pixel detecting part from image data read by said image scanning apparatus on the basis of information on a position of said abnormal pixel and a density of said abnormal pixel and an MTF weak-correcting part for weakening MTF correction for pixels in said range including an abnormal pixel detected by said abnormal pixel detecting part from image data read by said image scanning apparatus.

9. The image processing apparatus as claimed in any one of the preceding claims, wherein said abnormal pixel correcting part has a surrounding pixel statistic operating part for producing correction data from pixels around a range including an abnormal pixel detected by said abnormal pixel detecting part from image data read by said image scanning apparatus on the basis of information on a position of said abnormal pixel and a data switching part for substituting a pixel that is anticipated to become abnormal for said correction data.

10. The image processing apparatus as claimed in any one of the preceding claims, wherein said abnormal pixel correcting part has a surrounding pixel variance computing part for constructing a pixel matrix whose center element is said abnormal pixel and computing an average of surrounding pixels in a direction whose variance is less than any other direction with reference to normal pixels in each direction of said matrix in order to substitute said abnormal pixel for said average.

11. The image processing apparatus as claimed in any one of the preceding claims, wherein said abnormal pixel correcting part has an average computing part for constructing a pixel matrix whose center element is said abnormal pixel and computing an average of only normal surrounding pixels in order to substitute said abnormal pixel for said average.

12. The image processing apparatus as claimed in any one of the preceding claims, wherein said abnormal pixel correcting part has a maximum detecting part for constructing a pixel matrix whose center element is said abnormal pixel and detecting a pixel with a maximal density in a left-side column of said matrix and a pixel with a maximal density in a right-side column of said matrix and an average computing part for correcting said abnormal pixel by using said pixel with a maximal density in a left-side column of said matrix and said pixel with a maximal density in a right-side column of said matrix.

13. The image processing apparatus as claimed in any one of the preceding claims, wherein said abnormal pixel correcting part has a binarization/measurement processing part for constructing a pixel matrix whose center element is said abnormal pixel and binarizing pixels in said matrix surrounding said center element and a dynamic average computing part for producing correction data on the basis of a proportion of numbers of "0" and "1" in binarized data.

14. The image processing apparatus as claimed in any one of the preceding claims, wherein said abnormal pixel correcting part has a surrounding pixel computing part for constructing a pixel matrix whose center element is said abnormal pixel and computing an average of surrounding pixels in a direction whose variance is less than any other direction with reference to normal pixels in each direction of said matrix in order to substitute said abnormal pixel for said average, an average computing part for computing an average of only normal surrounding pixels in order to substitute said abnormal pixel for said average, and a data switching part for select either correction data substituted by said surrounding pixel computing part or correction data substituted by said average computing part according to a mode setting of an image.

15. The image processing apparatus as claimed in any one of the preceding claims, further comprising an image displaying part for displaying a corrected image.

16. An image scanning apparatus for illuminating light from an illuminant to a manuscript that is delivered by a manuscript delivery part and receiving reflected light from a surface of said manuscript by a photoelectric converting part to convert into digital data, comprising:
an abnormal pixel detecting part detecting a position of an abnormal pixel from which information data cannot be read due to a black object such as dust and a white object such as paper dust lying on a glass surface between said manuscript and said photoelectric converting part before a portion of reflected light from a surface of said manuscript is reached to said photoelectric converting part; and
a cleaning alarming part supplying an alarm to urge cleaning on said glass surface when said abnormal pixel detecting part detects an abnormal pixel.

17. An image scanning apparatus for illuminating light from an illuminant to a manuscript that is delivered by a manuscript delivery part and receiving reflected light from a surface of said manuscript by a photoelectric converting part to convert into digital data, comprising:
an abnormal pixel detecting part detecting a position of an abnormal pixel from which information data cannot be read due to a black object such as dust and a white object such as paper dust lying on a glass surface between said manuscript and said photoelectric converting part before a portion of reflected light from a surface of said manuscript is reached to said photoelectric converting part; and
a cleaning part cleaning said glass surface when said abnormal pixel detecting part detects an abnormal pixel.
